# EUROPÄISCHE PATENTANMELDUNG

(11) **EP 3 826 121 A1**
(43) Veröffentlichungstag der Anmeldung: **26.05.2021**
(21) Anmeldenummer: 20207239.3
(22) Anmeldetag: 12.11.2020
(51) Int. Cl.: H02B 1/052, H02B 1/01

(54) **HALTERUNG ZUM ANBRINGEN EINER TRAGSCHIENE FÜR ELEKTRISCHE GERÄTE AN EINER WAND**

(30) Priorität: 20.11.2019 CH 14652019
(71) Anmelder: Seifert, Robert, 3007 Bern (CH)
(72) Erfinder: Seifert, Robert, 3007 Bern (CH)
(74) Vertreter: AMMANN PATENTANWÄLTE AG

(57) **Zusammenfassung**

Die Halterung dient zum Anbringen einer Tragschiene (50a) für elektrische Geräte an einer Wand, insbesondere an einer Rückwand eines Schaltschranks, derart, dass die Tragschiene in ihrer Längsrichtung (X) horizontal verläuft, wobei die Tragschiene ein Profil aufweist, welches sich in Längsrichtung gesehen in der Breiten- (Z) und Höhenrichtung (Y) erstreckt. Die Halterung umfasst eine Anlagefläche (30a), an welche die Tragschiene rückseitig nach deren Montage anliegt, und ein erstes (10a) und zweites Halteelement (20a), welche in der Breitenrichtung der Tragschiene beabstandet zueinander angeordnet sind und über das Niveau der Anlagefläche reichen, sodass mindestens ein Teil der Tragschiene zwischen der Anlagefläche und den Halteelementen aufnehmbar ist. Die Halteelemente weisen zum Halten der Tragschiene in ihrer Höhenrichtung Anlagestellen auf, an welche die Tragschiene nach der Montage anliegt. Das erste Halteelement (10a) weist ein Auflager auf, auf welchem die Tragschiene nach der Montage aufliegt.

## Beschreibung

Die vorliegende Erfindung bezieht sich auf eine Halterung zum Anbringen einer Tragschiene für elektrische Geräte an einer Wand, beispielsweise an der Rückwand eines Schaltschrankes.

Als Tragschienen sind sogenannte Hutschienen bekannt, welche an einem vertikal verlaufenden Halteträger festgeschraubt werden. Zu diesem Zweck weisen die Hutschienen in der Mitte Durchgangslöcher auf, die vorfabriziert sind oder durch den Benutzer noch gebohrt werden müssen, was die Herstellung bzw. Montage verkompliziert. Auch erschwert das Festschrauben den Montagevorgang.

Eine Aufgabe der vorliegenden Erfindung ist es, eine Halterung vorzusehen, mit welcher auch eine Tragschiene ohne Durchgangslöcher an einer Wand angebracht werden kann.

Eine Halterung, die diese Aufgabe löst, ist im Anspruch 1 angegeben. Die weiteren Ansprüche geben bevorzugte Ausführungen der Halterung an, eine Tragschiene und einen Schaltschrank mit einer oder mehreren Halterungen.

Die erfindungsgemässe Halterung umfasst eine Anlagefläche, an welche die Tragschiene rückseitig nach deren Montage anliegt, und ein erstes und zweites Halteelement, welche in der Breitenrichtung der Tragschiene beabstandet zueinander angeordnet sind und welche zum Halten der Tragschiene in ihrer Höhenrichtung Anlagestellen aufweisen, an welche die Tragschiene nach der Montage anliegt,

Vorzugsweise sind die Anlagestellen in Bezug zueinander unbeweglich angeordnet. Beispielsweise sind die Halteelemente aus einem steifen Material wie Metall gefertigt, sodass sie insbesondere beim Anbringen der Tragschiene an der Halterung unbeweglich bleiben.

In einer Ausführungsform ist das erste und zweite Halteelement endseitig offen ausgebildet. Die beiden Halteelemente bilden so zwei offene Enden, zwischen welchen die Tragschiene anordbar ist. In einer alternativen Ausführungsform sind die Halteelemente über ein Stegteil miteinander verbunden.

Die Erfindung wird im Folgenden anhand von Ausführungsbeispielen unter Bezugnahme auf Figuren erläutert. Es zeigen
- Fig. 1: ein erstes Ausführungsbeispiel einer Halterung zum Halten einer Tragschiene an einem Halteträger;
- Fig. 2: eine Detailansicht aus der Ansicht gemäss Fig. 3;
- Fig. 3: die Anordnung gemäss Fig. 1 geschnitten entlang der Linie III-III gemäss Fig. 4;
- Fig. 4: eine Draufsicht der Anordnung gemäss Fig. 1, wobei der nicht-sichtbare Teil des Halteträgers gestrichelt dargestellt ist;
- Fig. 5: ein zweites Ausführungsbeispiel einer Halterung zum Halten einer Tragschiene an einem Halteträger;
- Fig. 6: eine Detailansicht aus der Ansicht gemäss Fig. 7;
- Fig. 7: die Anordnung gemäss Fig. 5 geschnitten entlang der Linie VII-VII gemäss Fig. 8;
- Fig. 8: eine Draufsicht der Anordnung gemäss Fig. 5, wobei der nicht-sichtbare Teil des Halteträgers gestrichelt dargestellt ist;
- Fig. 9: ein drittes Ausführungsbeispiel einer Halterung zum Halten einer Tragschiene an einem Halteträger;
- Fig. 10: eine Detailansicht aus der Ansicht gemäss Fig. 11;
- Fig. 11: die Anordnung gemäss Fig. 9 geschnitten entlang der Linie XI-XI gemäss Fig. 12;
- Fig. 12: eine Draufsicht der Anordnung gemäss Fig. 9, wobei der nicht-sichtbare Teil des Halteträgers gestrichelt dargestellt ist;
- Fig. 13: ein viertes Ausführungsbeispiel einer Halterung zum Halten einer Tragschiene an einem Halteträger;
- Fig. 14: eine Detailansicht aus der Ansicht gemäss Fig. 15;
- Fig. 15: die Anordnung gemäss Fig. 13 geschnitten entlang der Linie XV-XV gemäss Fig. 16;
- Fig. 16: eine Draufsicht der Anordnung gemäss Fig. 13, wobei der nicht-sichtbare Teil des Halteträgers gestrichelt dargestellt ist;
- Fig. 17: ein fünftes Ausführungsbeispiel einer Halterung zum Halten einer Tragschiene an einem Halteträger;
- Fig. 18: eine Detailansicht aus der Ansicht gemäss Fig. 19;
- Fig. 19: die Anordnung gemäss Fig. 17 geschnitten entlang der Linie XIX- XIX gemäss Fig. 20;
- Fig. 20: eine Draufsicht der Anordnung gemäss Fig. 17, wobei der nicht-sichtbare Teil des Halteträgers gestrichelt dargestellt ist;
- Fig. 21: ein sechstes Ausführungsbeispiel einer Halterung zum Halten einer Tragschiene an einem Halteträger;
- Fig. 22: eine Detailansicht aus der Ansicht gemäss Fig. 23;
- Fig. 23: die Anordnung gemäss Fig. 21 geschnitten entlang der Linie XXIII-XXIII gemäss Fig. 24;
- Fig. 24: eine Draufsicht der Anordnung gemäss Fig. 21, wobei der nicht-sichtbare Teil des Halteträgers gestrichelt dargestellt ist;
- Fig. 25: ein siebtes Ausführungsbeispiel einer Halterung zum Halten einer Tragschiene an einem Halteträger;
- Fig. 26: eine Detailansicht aus der Ansicht gemäss Fig. 27;
- Fig. 27: die Anordnung gemäss Fig. 25 geschnitten entlang der Linie XXVII-XXVII gemäss Fig. 28;
- Fig. 28: eine Draufsicht der Anordnung gemäss Fig. 25, wobei der nicht-sichtbare Teil des Halteträgers gestrichelt dargestellt ist;
- Fig. 29: ein achtes Ausführungsbeispiel einer Halterung zum Halten einer Tragschiene an einem Halteträger;
- Fig. 30: eine Detailansicht aus der Ansicht gemäss Fig. 31;
- Fig. 31: die Anordnung gemäss Fig. 29 geschnitten entlang der Linie XXXI-XXXI gemäss Fig. 32;
- Fig. 32: eine Draufsicht der Anordnung gemäss Fig. 29, wobei der nicht-sichtbare Teil des Halteträgers gestrichelt dargestellt ist;
- Fig. 33: die Tragschiene gemäss Fig. 2;
- Fig. 34: die Tragschiene gemäss Fig. 6;
- Fig. 35: die Tragschiene gemäss Fig. 18;
- Fig. 36: die Tragschiene gemäss Fig. 10;
- Fig. 37: die Tragschiene gemäss Fig. 30;
- Fig. 38: eine Hutschiene in einer Vorderansicht;
- Fig. 39: die Hutschiene geschnitten entlang der Linie XXXIX-XXXIX gemäss Fig. 38; und
- Fig. 40: eine Tragschiene mit darauf angebrachten elektrischen Geräten.

Nachfolgend werden verschiedene Ausführungsbeispiele einer Halterung für eine Tragschiene beschrieben, welche an einer freien Wand oder auch an einer Rückwand in einem Schaltschrank angebracht wird, um elektrische Geräte austauschbar daran anzubringen. Die Halterung ist dabei eingerichtet, die Tragschiene in einer horizontalen Lage an der Wand anzubringen. Soweit nicht anders definiert, wird jeweils ein Koordinatensystem so festgelegt, dass die X-Achse der Richtung entspricht, in welcher sich die Tragschiene in ihrer Längsrichtung erstreckt, die Y-Achse der Richtung, in welcher sich die Tragschiene in ihrer Höhenrichtung erstreckt, und die Z-Achse der Richtung, in welcher sich die Tragschiene in ihrer Breitenrichtung erstreckt. Ist die Tragschiene an der Halterung gehalten, verlaufen somit die X-Achse in horizontaler Richtung und die Z-Achse in vertikaler Richtung.

Nachfolgend werden auch verschiedene Arten von Tragschienen gezeigt. Allen ist gemeinsam, dass sie an der Vorderseite Auskragungen aufweisen, die entlang den beiden Längsseiten einer Tragschiene, d.h. in X-Richtung verlaufen und im Profil gesehen in der positiven bzw. negativen Z-Achse hervorstehen. Die Auskragungen dienen dazu, ein elektrisches Gerät zu halten, typischerweise durch Aufschnappen. Die Tragschienen unterscheiden sich u.a. durch die Art der Schnittstelle, welche sie mit der jeweiligen Halterung zum Halten bilden.

In den nachfolgend beschriebenen Ausführungsformen wird jeweils für dasselbe Element dasselbe Bezugszeichen verwendet.

### Erstes Ausführungsbeispiel

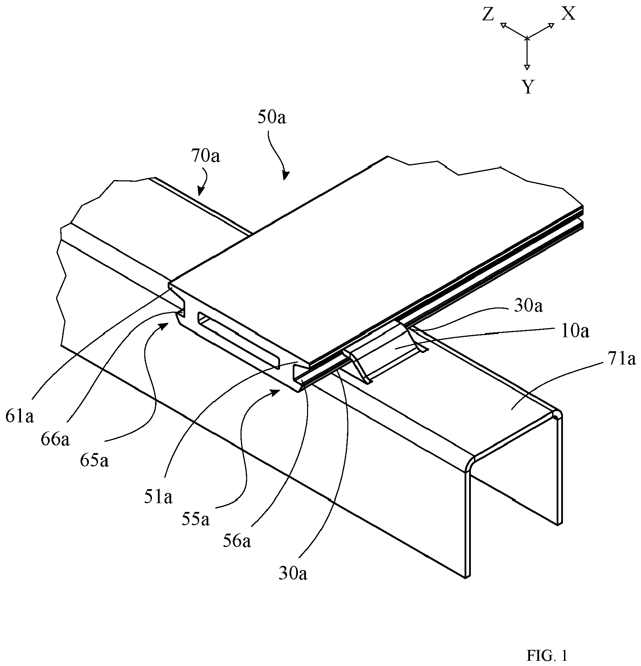

Fig. 1-4 zeigen ein Ausführungsbeispiel einer Halterung mit einem ersten Halteelement 10a, einem zweiten Halteelement 20a und einer Anlagefläche 30a, an welcher die Tragschiene 50a nach der Montage mit ihrer Rückseite anliegt.

Die Halteelemente 10a, 20a sind in Z-Richtung gesehen beabstandet zueinander angeordnet und sind so geformt, dass sie über das Niveau der Anlagefläche 30a reichen und jeweils einen Hinterschnitt bilden. Zwischen den Halteelementen 10a, 20a und der Anlagefläche 30a ergibt sich somit ein Aufnahmeraum, in welcher ein Teil der Tragschiene 50a aufnehmbar ist.

Das jeweilige Halteelement 10a, 20a weist eine Anlagefläche 11a, 21a auf, welche auf der Rückseite eines Halteelements 10a, 20a angeordnet ist, und eine Anschlagsfläche 12a, 22a, welche durch die Stirnseite des Endes eines Halteelements 10a, 20a gebildet ist. Die beiden Flächen 11a und 12a bzw. 21a und 22a eines jeweiligen Halteelements 10a, 20a sind quer zueinander angeordnet, vorzugsweise in einem im Wesentlichen rechten Winkel.

Im vorliegenden Beispiel weist die Tragschiene 50a rückseitig Leisten 55a, 65a auf, die entlang den beiden Längsseiten einer Tragschiene 50a, d.h. in X-Richtung verlaufen und quer dazu gesehen in der positiven bzw. negativen Z-Achse hervorstehen. Die Leisten 55a, 65a bilden somit in der Seitenansicht gesehen Nasen, die zum Halten der Tragschiene 50a mit den Halteelementen 10a, 20a zusammenwirken.

Das jeweilige Halteelement 10a, 20a bildet zusammen mit der Anlagefläche 30a einen Zwischenraum, in welche die Nase 55a, 65a der Tragschiene 50a einfügbar ist. Die Halterung 10a, 20a, 30a bildet demnach zusammen mit der Nase 55a, 65a der Tragschiene 50a eine Überlappungsverbindung.

Die jeweilige Nase 55a, 65a weist eine Vorderseite 56a, 66a auf, an welche die Anlagefläche 11a, 21a eines Halteelements 10a, 20a anliegt, so dass die Tragschiene 50a in Y-Richtung gehalten ist. Die Anlageflächen 11a, 21a bilden somit Anlagestellen, welche die Tragschiene 50a in ihrer Höhenrichtung halten. Die Höhe der Nasen 55a, 65a entspricht dem Abstand zwischen der Anlagefläche 30a und den Anlageflächen 11a, 21a, so dass diese die Tragschiene 50a in ihrer Höhenrichtung unverschiebbar halten.

Zwischen einer jeweiligen Auskragung 51a, 61a und einer jeweiligen Nase 55a, 65a weist die Tragschiene 50a eine Zwischenfläche 57a, 67a auf, die quer zur Vorderseite 56a, 66a einer Nase 55a, 65a angeordnet ist, vorzugsweise in einem im Wesentlichen rechten Winkel. Bei der vorliegenden Anordnung von Halterung und Tragschiene 50a wirkt die Schwerkraft in Richtung der negativen Z-Achse. Im montierten Zustand wirkt die Anschlagsfläche 12a des ersten Halteelements 10a als Auflager für die Tragschiene 50a, welche mit ihrer Zwischenfläche 57a aufliegt. Die Anschlagsfläche 12a des zweiten Halteelements 10a wirkt als Begrenzungsteil in der Breitenrichtung der Tragschiene 50a. Der Abstand zwischen den Zwischenflächen 57a, 67a entspricht hier dem Abstand zwischen den Anschlagsflächen 12a, 22a, so dass die Tragschiene 50a zwischen diesen unverschiebbar in der Breitenrichtung, d.h. in der Z-Achse gehalten ist.

Beim vorliegenden Beispiel ist der Eingriff der Halteelemente 10a, 20a an die Tragschiene 50a beabstandet zu deren Vorderseite und nahe zu deren Rückseite angeordnet. Es ist damit Freiraum um die Auskragungen 51a, 61a gegeben, so dass an diesen auch am Ort der Halterung ein elektrisches Gerät anbringbar ist. Vorzugsweise beträgt in Höhenrichtung der Tragschiene 50a gemessen der minimale Abstand Fa zwischen den Halteelementen 10a, 20a und der Vorderseite der Tragschiene 50a mindestens die Hälfte der Höhe Ha der Tragschiene 50a.

Beim vorliegenden Beispiel sind die Halteelemente 10a, 20a symmetrisch zueinander ausgebildet. Die Halteelemente 10a, 20a können somit auch um 180 Grad gedreht werden, um daran die Tragschiene 50a anzubringen. Bei dieser Anordnung wirkt dann die Anschlagsfläche 22a des zweiten Halteelements 20a als Auflager für die Tragschiene 50a.

Die Anlagefläche 30a ist hier als Teil des Halteträgers 70a ausgebildet, welcher beim vorliegenden Ausführungsbeispiel ein U-förmiges Profil aufweist und welcher Befestigungsmittel zur Befestigung z.B. im Schaltschrank enthalten kann, z.B. ein oder mehrere Löcher für eine Schraube.

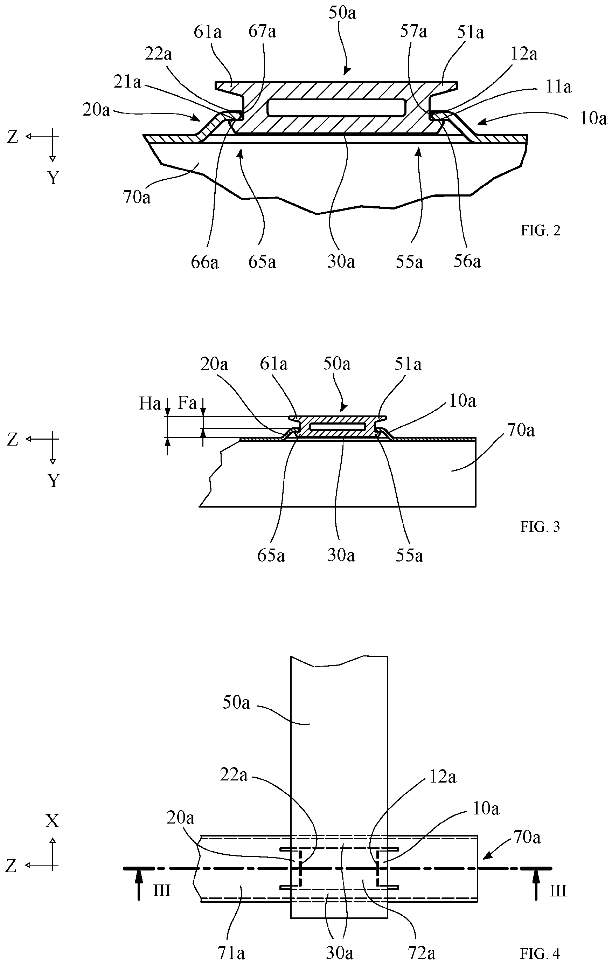

Die Halteelemente 10a, 20a sind hier einteilig mit dem Halteträger 70a ausgebildet, indem deren Form z.B. aus der Vorderseite 71a des Halteträgers 70a herausgestanzt und in die gewünschte Form gebogen wird. Zwischen den Halteelementen 10a, 20a ergibt sich somit ein Durchbruch 72a in der Vorderseite 71a des Halteträgers 70a, welche die Anlagefläche 30a in zwei Abschnitte unterteilt (vgl. Fig. 4).

Als Variante ist es denkbar, das Halteelement 10a oder 20a oder beide Halteelemente 10a und 20a als eine vom Halteträger 70a separat ausgebildete Komponente vorzusehen, welche vorzugsweise mittels lösbarer Verbindung am Halteträger 70a anbringbar ist. Entsprechend kann die Anlagefläche 30a ein Teil dieser separaten Komponente sein.

Sind die Halteelemente 10a, 20a unlösbar mit dem Halteträger 70a verbunden, ist die Tragschiene 50a daran anbringbar, indem die Nasen 55a, 65a von der Seite zwischen die Halteelemente 10a, 20a eingefügt und durch Verschieben in der X-Richtung in die gewünschten Endlage verschoben werden. Ist mindestens ein Halteelement 10a, 20a als eine vom Halteträger 70a separate und mit diesem als lösbar verbindbare Komponente ausgebildet, so kann die Tragschiene 50a direkt bei ihrer Endlage am Halteträger 70a angeordnet und dort durch Befestigen der Komponente am Halteträger 70a gehalten werden.

### Zweites Ausführungsbeispiel

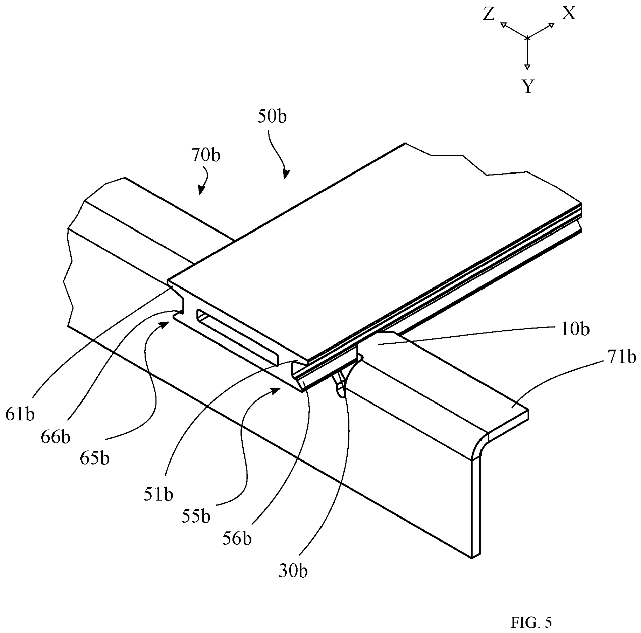

Fig. 5-8 zeigen ein Ausführungsbeispiel einer Halterung mit einem ersten Halteelement 10b, einem zweiten Halteelement 20b und einer Anlagefläche 30b, an welcher die Tragschiene 50b nach der Montage mit ihrer Rückseite anliegt.

Die Halteelemente 10b, 20b sind in Z-Richtung gesehen beabstandet zueinander angeordnet und sind so geformt, dass sie über das Niveau der Anlagefläche 30b reichen und jeweils einen Hinterschnitt bilden. Zwischen den Halteelementen 10b, 20b und der Anlagefläche 30b ergibt sich somit ein Aufnahmeraum, in welcher ein Teil der Tragschiene 50b aufnehmbar ist.

Das jeweilige Halteelement 10b, 20b weist eine Anlagefläche 11b, 21b auf, welche durch die Stirnseite des Endes eines Halteelements 10b, 20b gebildet ist. Die Anlagefläche 11b des ersten Halteelements 10b und die Anlagefläche 21b des zweiten Halteelements 20b sind zueinander geneigt angeordnet. In Höhenrichtung der Tragschiene 50b gesehen bilden die Anlageflächen 11b, 21b somit eine Verjüngung.

Im vorliegenden Beispiel weist die Tragschiene 50b rückseitig Leisten 55b, 65b auf, die entlang den beiden Längsseiten einer Tragschiene 50b, d.h. in X-Richtung verlaufen. Die jeweilige Leiste 55b, 65b weist eine Seite auf, die mit einem Winkel abgeschrägt ist, der komplementär zum Neigewinkel der Anlagefläche 11b, 21b ist. Es ergibt sich somit an der jeweiligen Leiste 55b, 65b eine Gegenanlagefläche 56b, 66b, welche an der Anlagefläche 11b, 21b eines Halteelements 10b, 20b anliegt, so dass die Tragschiene 50b in Höhen- und Breitenrichtung gehalten ist.

Die Halterung 10b, 20b, 30b bildet somit zusammen mit den Leisten 55b, 65b der Tragschiene 50b eine Schwalbenschwanzverbindung.

Bei der vorliegenden Anordnung von Halterung und Tragschiene 50b wirkt die Schwerkraft in Richtung der negativen Z-Achse. Im montierten Zustand wirkt die Anlagefläche 11b des ersten Halteelements 10b sowohl als Anlagestelle in der Y-Richtung als auch als Auflager für die Tragschiene 50b, welche mit ihrer Gegenanlagefläche 56b aufliegt.

Beim vorliegenden Beispiel ist der Eingriff der Halteelemente 10b, 20b an die Tragschiene 50b beabstandet zu deren Vorderseite und nahe zu deren Rückseite angeordnet. Es ist damit Freiraum um die Auskragungen 51b, 61b gegeben, so dass an diesen auch am Ort der Halterung ein elektrisches Gerät anbringbar ist. Vorzugsweise beträgt in Höhenrichtung der Tragschiene 50b gemessen der minimale Abstand Fb zwischen den Halteelementen 10b, 20b und der Vorderseite der Tragschiene 50b mindestens die Hälfte der Höhe Hb der Tragschiene 50b.

Beim vorliegenden Beispiel sind die Halteelemente 10b, 20b symmetrisch zueinander ausgebildet. Die Halteelemente 10b, 20b können somit auch um 180 Grad gedreht werden, um daran die Tragschiene 50b anzubringen. Bei dieser Anordnung wirkt dann die Anlagefläche 21b des zweiten Halteelements 20b als Auflager für die Tragschiene 50b.

Die Anlagefläche 30b ist hier als Teil des Halteträgers 70b ausgebildet, welcher beim vorliegenden Ausführungsbeispiel ein L-förmiges Profil aufweist und welcher Befestigungsmittel zur Befestigung z.B. im Schaltschrank enthalten kann, z.B. ein oder mehrere Löcher für eine Schraube.

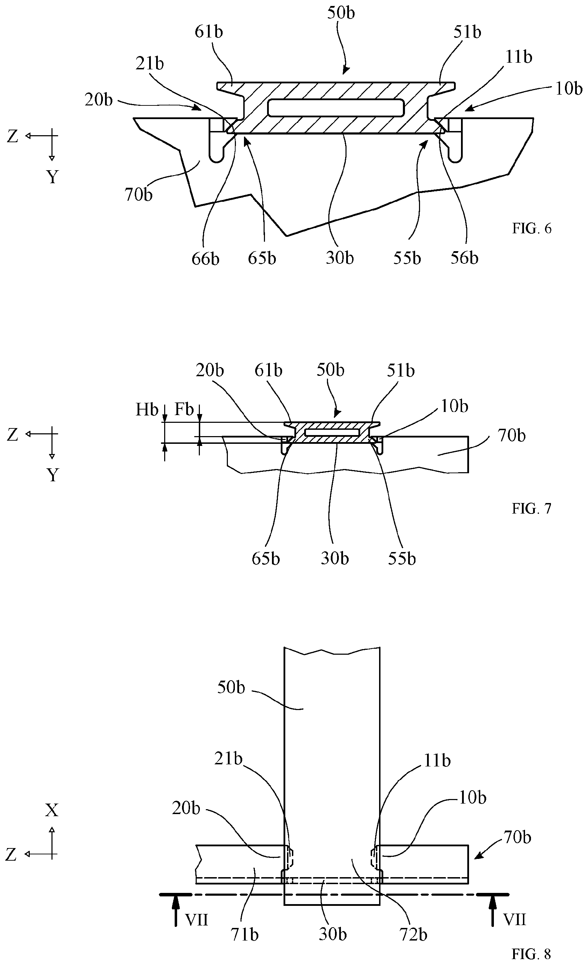

Die Halteelemente 10b, 20b sind hier einteilig mit dem Halteträger 70b ausgebildet, indem deren Form z.B. aus der Vorderseite 71b des Halteträgers 70b herausgestanzt und in die gewünschte Form gebogen wird. Zwischen den Halteelementen 10b, 20b ergibt sich somit ein Durchbruch 72b in der Vorderseite 71b des Halteträgers 70b, an welchen die Anlagefläche 30b angrenzt (vgl. Fig. 8).

Als Variante ist es denkbar, das Halteelement 10b oder 20b oder beide Halteelemente 10b und 20b als eine vom Halteträger 70b separat ausgebildete Komponente vorzusehen, welche vorzugsweise mittels lösbarer Verbindung am Halteträger 70b anbringbar ist. Entsprechend kann die Anlagefläche 30b ein Teil dieser separaten Komponente sein.

Sind die Halteelemente 10b, 20b unlösbar mit dem Halteträger 70b verbunden, ist die Tragschiene 50b daran anbringbar, indem die Leisten 55b, 65b von der Seite zwischen die Halteelemente 10b, 20b eingefügt und durch Verschieben in der X-Richtung in die gewünschten Endlage verschoben werden. Ist mindestens ein Halteelement 10b, 20b als eine vom Halteträger 70b separate und mit diesem als lösbar verbindbare Komponente ausgebildet, so kann die Tragschiene 50b direkt bei ihrer Endlage am Halteträger 70b angeordnet und dort durch Befestigen der Komponente am Halteträger 70b gehalten werden.

### Drittes Ausführungsbeispiel

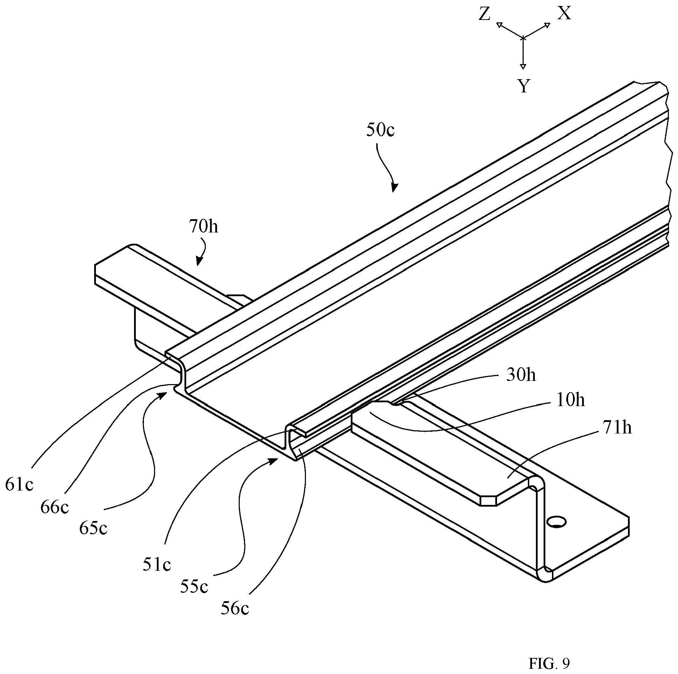

Fig. 9-12 zeigen ein Ausführungsbeispiel, bei welchem die Halterung eine Variante jener aus dem zweiten Ausführungsbeispiel ist, während die Tragschiene 50c eine andere Ausgestaltung aufweist.

Die Halterung weist ein erstes Halteelement 10h, ein zweites Halteelement 20h und eine Anlagefläche 30h, an welcher die Tragschiene 50c nach der Montage mit ihrer Rückseite anliegt.

Die Halteelemente 10h, 20h sind in Z-Richtung gesehen beabstandet zueinander angeordnet und sind so geformt, dass sie über das Niveau der Anlagefläche 30h reichen und jeweils einen Hinterschnitt bilden. Zwischen den Halteelementen 10h, 20h und der Anlagefläche 30h ergibt sich somit ein Aufnahmeraum, in welcher ein Teil der Tragschiene 50c aufnehmbar ist.

Das jeweilige Halteelement 10h, 20h weist eine Anlagefläche 11h, 21h auf, welche durch die Stirnseite des Endes eines Halteelements 10h, 20h gebildet ist. Die Anlagefläche 11h des ersten Halteelements 10h und die Anlagefläche 21h des zweiten Halteelements 20h sind zueinander geneigt angeordnet. In Höhenrichtung der Tragschiene 50c gesehen bilden die Anlageflächen 11h, 21h somit eine Verjüngung.

Die Tragschiene 50c weist ein hutförmiges Profil auf. Der jeweilige Seitenbereich 55c, 65c, welcher benachbart zur Rückseite der Tragschiene 50c angeordnet ist, weist eine Verdickung auf, sodass sich eine geneigte Gegenanlagefläche 56c, 66c ergibt. Der Neigewinkel ist komplementär zum Neigewinkel der Anlagefläche 11h, 21h gewählt. Es ergeben sich somit an den Seitenbereichen 55c, 65c Gegenanlageflächen 56c, 66c, welche an den Anlageflächen 11h, 21h der Halteelemente 10h, 20h anliegen, so dass die Tragschiene 50c in Höhen- und Breitenrichtung gehalten ist.

Die Halterung 10h, 20h, 30h bildet somit zusammen mit den Seitenbereichen 55c, 65c der Tragschiene 50c eine Schwalbenschwanzverbindung.

Wie beim zweiten Ausführungsbeispiel ist der Eingriff der Halteelemente 10h, 20h an die Tragschiene 50c beabstandet zu deren Vorderseite und nahe zu deren Rückseite angeordnet. Es ist damit Freiraum um die Auskragungen 51c, 61c gegeben, so dass an diesen auch am Ort der Halterung ein elektrisches Gerät anbringbar ist. Vorzugsweise beträgt in Höhenrichtung der Tragschiene 50c gemessen der minimale Abstand Fc zwischen den Halteelementen 10h, 20h und der Vorderseite der Tragschiene 50c mindestens die Hälfte der Höhe Hc der Tragschiene 50c.

Beim vorliegenden Beispiel sind die Halteelemente 10h, 20h symmetrisch zueinander ausgebildet. Die Halteelemente 10h, 20h können somit auch um 180 Grad gedreht werden, um daran die Tragschiene 50c anzubringen. Bei dieser Anordnung wirkt dann die Anlagefläche 21h des zweiten Halteelements 20h als Auflager für die Tragschiene 50c.

Die Anlagefläche 30h ist hier als Teil des Halteträgers 70h ausgebildet, welcher beim vorliegenden Ausführungsbeispiel ein Z-förmiges Profil aufweist und welcher

Befestigungsmittel zur Befestigung z.B. im Schaltschrank enthalten kann, z.B. ein oder mehrere Löcher für eine Schraube.

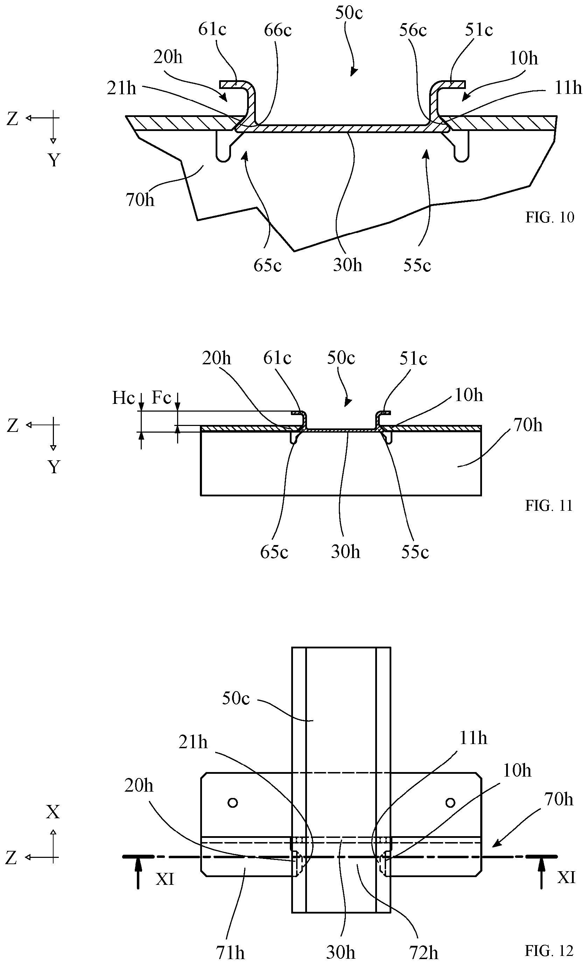

Die Halteelemente 10h, 20h sind hier einteilig mit dem Halteträger 70h ausgebildet, indem deren Form z.B. aus der Vorderseite 71h des Halteträgers 70h herausgestanzt und in die gewünschte Form gebogen wird. Zwischen den Halteelementen 10h, 20h ergibt sich somit ein Durchbruch 72h in der Vorderseite 71h des Halteträgers 70h, an welchen die Anlagefläche 30h angrenzt (vgl. Fig. 12).

Als Variante ist es denkbar, das Halteelement 10h oder 20h oder beide Halteelemente 10h und 20h als eine vom Halteträger 70h separat ausgebildete Komponente vorzusehen, welche vorzugsweise mittels lösbarer Verbindung am Halteträger 70h anbringbar ist. Entsprechend kann die Anlagefläche 30h ein Teil dieser separaten Komponente sein.

Sind die Halteelemente 10h, 20h unlösbar mit dem Halteträger 70h verbunden, ist die Tragschiene 50c daran anbringbar, indem die Leisten 55c, 65c von der Seite zwischen die Halteelemente 10h, 20h eingefügt und durch Verschieben in der X-Richtung in die gewünschten Endlage verschoben werden. Ist mindestens ein Halteelement 10h, 20h als eine vom Halteträger 70h separate und mit diesem als lösbar verbindbare Komponente ausgebildet, so kann die Tragschiene 50c direkt bei ihrer Endlage am Halteträger 70h angeordnet und dort durch Befestigen der Komponente am Halteträger 70h gehalten werden.

### Viertes Ausführungsbeispiel

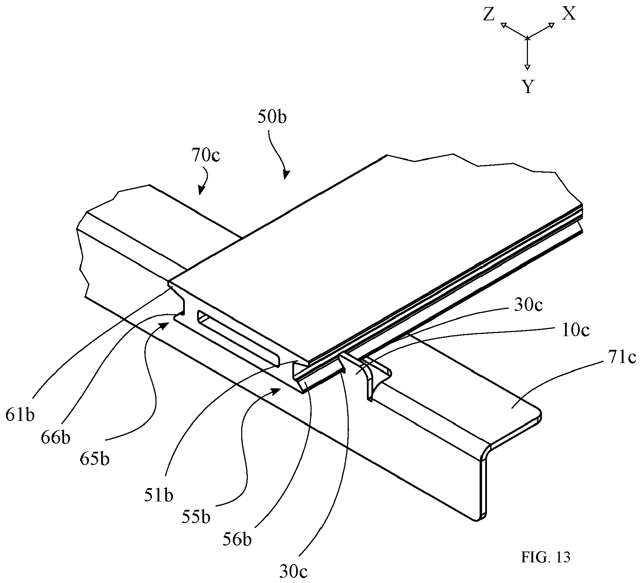

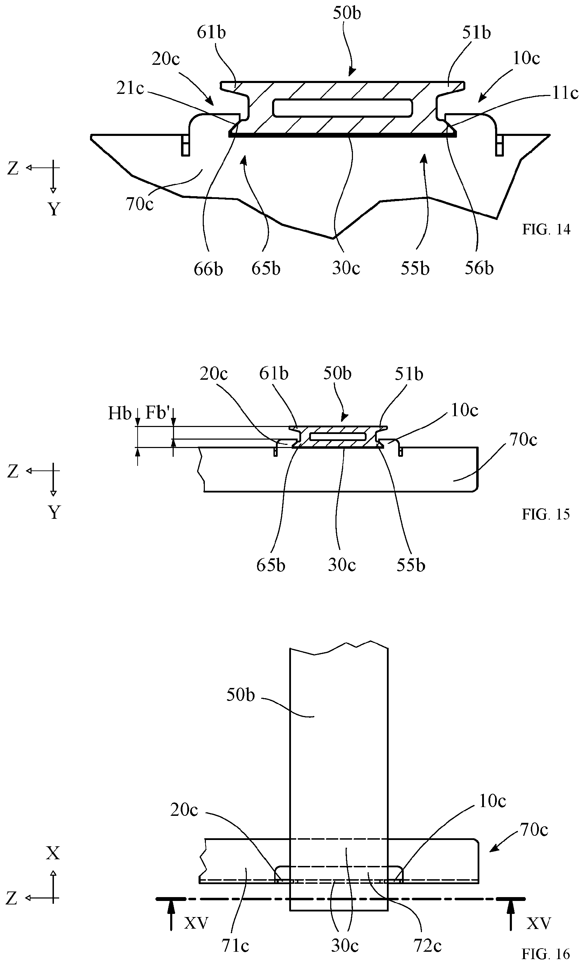

Fig. 13-16 zeigen ein Ausführungsbeispiel, bei welchem die Tragschiene 50b jener aus dem zweiten Ausführungsbeispiel entspricht, während die Halterung eine andere Ausgestaltung aufweist.

Die Halterung umfasst ein erster Halteelement 10c, ein zweites Halteelement 20c und eine Anlagefläche 30c, an welcher die Tragschiene 50b nach der Montage mit ihrer Rückseite anliegt.

Die Halteelemente 10c, 20c sind in Z-Richtung gesehen beabstandet zueinander angeordnet und sind so geformt, dass sie über das Niveau der Anlagefläche 30c reichen und jeweils einen Hinterschnitt bilden. Zwischen den Halteelementen 10c, 20c und der Anlagefläche 30c ergibt sich somit ein Aufnahmeraum, in welcher ein Teil der Tragschiene 50b aufnehmbar ist.

Das jeweilige Halteelement 10c, 20c weist eine Anlagefläche 11c, 21c auf, welche durch die Innenseite eines Halteelements 10c, 20c gebildet ist. Die Anlagefläche 11c des ersten Halteelements 10c und die Anlagefläche 21c des zweiten Halteelements 20c sind zueinander geneigt angeordnet. In Höhenrichtung der Tragschiene 50b gesehen bilden die Anlageflächen 11c, 21c somit eine Verjüngung.

Im montierten Zustand liegt eine jeweilige Gegenanlagefläche 56b, 66b der Tragschiene 50b an einer Anlagefläche 11c, 21c des Halteelements 10c, 20c an, so dass die Tragschiene 50b in Höhen- und Breitenrichtung gehalten ist.

Die Halterung 10c, 20c, 30c bildet somit zusammen mit den Leisten 55b, 65b der Tragschiene 50b eine Schwalbenschwanzverbindung.

Bei der vorliegenden Anordnung von Halterung und Tragschiene 50b wirkt die Schwerkraft in Richtung der negativen Z-Achse. Im montierten Zustand wirkt die Anlagefläche 11c des ersten Halteelements 10c sowohl als Anlagestelle in der Y-Richtung als auch als Auflager für die Tragschiene 50b, welche mit ihrer Gegenanlagefläche 56b aufliegt.

Beim vorliegenden Beispiel ist der Eingriff der Halteelemente 10c, 20c an die Tragschiene 50b beabstandet zu deren Vorderseite und nahe zu deren Rückseite angeordnet. Es ist damit Freiraum um die Auskragungen 51b, 61b gegeben, so dass an diesen auch am Ort der Halterung ein elektrisches Gerät anbringbar ist. Vorzugsweise beträgt in Höhenrichtung der Tragschiene 50b gemessen der minimale Abstand Fb' zwischen den Halteelementen 10c, 20c und der Vorderseite der Tragschiene 50b mindestens die Hälfte der Höhe Hb der Tragschiene 50b.

Beim vorliegenden Beispiel sind die Halteelemente 10c, 20c symmetrisch zueinander ausgebildet. Die Halteelemente 10c, 20c können somit auch um 180 Grad gedreht werden, um daran die Tragschiene 50b anzubringen. Bei dieser Anordnung wirkt dann die Anlagefläche 21c des zweiten Halteelements 20c als Auflager für die Tragschiene 50b.

Die Anlagefläche 30c ist hier als Teil des Halteträgers 70c ausgebildet, welcher beim vorliegenden Ausführungsbeispiel ein L-förmiges Profil aufweist und welcher Befestigungsmittel zur Befestigung z.B. im Schaltschrank enthalten kann, z.B. ein oder mehrere Löcher für eine Schraube.

Die Halteelemente 10c, 20c sind hier einteilig mit dem Halteträger 70c ausgebildet, indem deren Form z.B. aus der Vorderseite 71c des Halteträgers 70c herausgestanzt und dieser so gebogen wird, dass die Vorderseite 71c im Wesentlichen rechtwinklig zu den Halteelementen 10c, 20c steht. Dabei entsteht ein Durchbruch 72c in der Vorderseite 71c. Die Halteelemente 10c, 20c sind hier über ein Mittelteil verbunden, welches zusammen mit der Vorderseite 71c als Anlagefläche 30c für die Tragschiene 50b dient.

Als Variante ist es denkbar, das Halteelement 10c oder 20c oder beide Halteelemente 10c und 20c als eine vom Halteträger 70c separat ausgebildete Komponente vorzusehen, welche vorzugsweise mittels lösbarer Verbindung am Halteträger 70c anbringbar ist. Entsprechend kann die Anlagefläche 30c ein Teil dieser separaten Komponente sein.

Sind die Halteelemente 10c, 20c unlösbar mit dem Halteträger 70c verbunden, ist die Tragschiene 50b daran anbringbar, indem die Leisten 55b, 65b von der Seite zwischen die Halteelemente 10c, 20c eingefügt und durch Verschieben in der X-Richtung in die gewünschten Endlage verschoben werden. Ist mindestens ein Halteelement 10c, 20c als eine vom Halteträger 70c separate und mit diesem als lösbar verbindbare Komponente ausgebildet, so kann die Tragschiene 50b direkt bei ihrer Endlage am Halteträger 70c angeordnet und dort durch Befestigen der Komponente am Halteträger 70c gehalten werden.

### Fünftes Ausführungsbeispiel

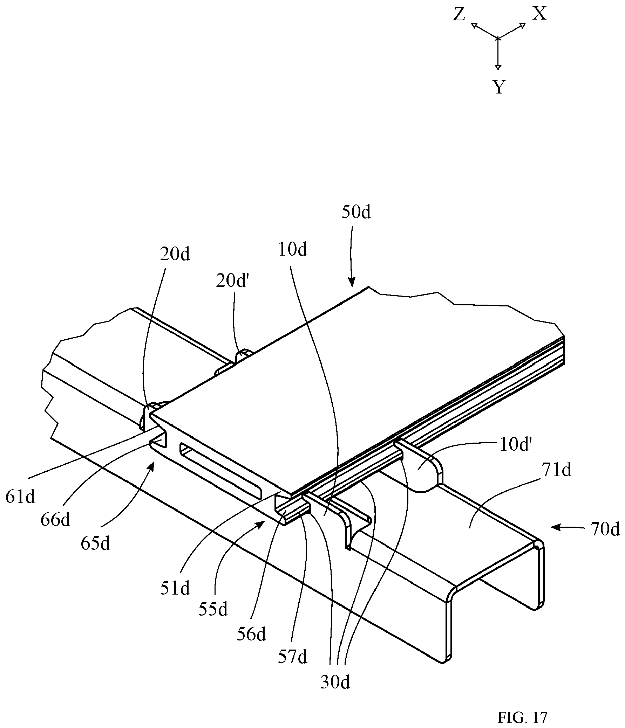

Fig. 17-20 zeigen ein Ausführungsbeispiel einer Halterung mit einem ersten Halteelement 10d, einem weiteren ersten Halteelement 10d', einem zweiten Halteelement 20d, einem weiteren zweiten Halteelement 20d', und einer Anlagefläche 30d, an welcher die Tragschiene 50d nach der Montage mit ihrer Rückseite anliegt.

Die Halteelemente 10d und 10d' sind gleich ausgebildet und in X-Richtung versetzt zueinander angeordnet. Die Halteelemente 20d und 20d' sind gleicht ausgebildet und in X-Richtung versetzt zueinander angeordnet. Die nachfolgende Beschreibung des Halteelements 10d bzw. 20d gilt in gleicher Weise für das Halteelement 10d' bzw. 20d'. Die Halteelemente 10d, 20d sind in Z-Richtung gesehen beabstandet zueinander angeordnet und sind so geformt, dass sie über das Niveau der Anlagefläche 30d reichen und jeweils einen Hinterschnitt bilden. Zwischen den Halteelementen 10d, 20d und der Anlagefläche 30d ergibt sich somit ein Aufnahmeraum, in welcher ein Teil der Tragschiene 50d aufnehmbar ist.

Im Unterschied zu den bisher gezeigten Ausführungsbeispielen sind die beiden Halteelemente 10d, 20d nicht gleich ausgebildet. Das erste Halteelement 10d weist innenseitig eine Anlagefläche 11d auf sowie eine Anschlagsfläche 12d, die quer dazu angeordnet ist. Die Anlagefläche 11d kann in Bezug auf die Z-Achse geneigt angeordnet sein, so dass das Halteelement 10d einen Hinterschnitt aufweist, der sich in Richtung zum zweiten Halteelement 20d hin gesehen aufweitet.

Das zweite Halteelement 20d weist innenseitig eine Anlagefläche 21d auf, welche in Bezug auf die Z-Achse geneigt angeordnet ist, so dass es einen Hinterschnitt aufweist, der sich in Richtung zum ersten Halteelement 10d hin gesehen aufweitet. Der Neigewinkel der Anlagefläche 21d ist so gewählt, dass dann, wenn sie in Richtung zum ersten Halteelement 10d hin verlängert würde, über dieses hinwegreicht.

Das zweite Halteelement 20d weist weiter eine Anschlagsfläche 22d auf, welche durch die Stirnseite des Endes des Halteelements 20d gebildet ist.

Im vorliegenden Beispiel weist die Tragschiene 50d rückseitig Leisten 55d, 65d auf, die entlang den beiden Längsseiten einer Tragschiene 50d, d.h. in X-Richtung verlaufen und quer dazu gesehen in der positiven bzw. negativen Z-Achse hervorstehen.

Die Leisten 55d, 65d bilden somit in der Seitenansicht gesehen Nasen, die zum Halten der Tragschiene 50d mit den Halteelementen 10d, 20d zusammenwirken.

Die jeweilige Leiste 55d, 65d weist eine Vorderseite mit einer Gegenanlagefläche 56d, 66d auf, an welche die Anlagefläche 11d, 21d eines Halteelements 10d, 20d anliegt, so dass die Tragschiene 50d in Y-Richtung gehalten ist. Die Anlageflächen 11d, 21d bilden somit Anlagestellen. Die jeweilige Gegenanlagefläche 56d, 66d kann abgeschrägt sein z.B. mit einem Neigewinkel komplementär zur gegenüberliegenden Anlagefläche 11d, 21d eines Halteelements 10d, 20d. Die Höhe einer Leiste 55d, 65d ist an den Abstand zwischen der Anlagefläche 30d und den Anlageflächen 11d, 21d derart angepasst, dass diese die Tragschiene 50d in ihrer Höhenrichtung unverschiebbar halten.

Die Stirnseite der ersten Leiste 55d weist eine Gegenanschlagsfläche 57d auf, die quer zur Gegenanlagefläche 56d angeordnet ist. Bei der vorliegenden Anordnung von Halterung und Tragschiene 50d wirkt die Schwerkraft in Richtung der negativen Z-Achse. Im montierten Zustand wirkt die Anschlagsfläche 12d des ersten Halteelements 10d als Auflager für die Tragschiene 50d, welche mit ihrer Gegenanschlagsfläche 57d aufliegt.

Zwischen der zweiten Auskragung 61d und der zweiten Leiste 65d weist die Tragschiene 50d eine Zwischenfläche 67d auf, die quer zur Gegenanlagefläche 66d angeordnet ist. Die Zwischenfläche 67d wirkt auf die Anschlagsfläche 22d des zweiten Halteelements 10d, so dass eine Verschiebung der Tragschiene 50d in deren Breitenrichtung begrenzt ist.

In Richtung der Höhenrichtung der Tragschiene 50d gesehen, ist der Hinterschnitt, welcher das zweite Halteelement 20d bildet, länger als der durch das erste Halteelement 10d gebildete Hinterschnitt. Dies erlaubt es, die Leisten 55d, 65d von vorne an der Halterung anzubringen, d.h. die Tragschiene 50d braucht nicht durch Verschieben in der X-Richtung, wie dies bei den bisher beschriebenen Ausführungsbeispielen der Fall ist von der Seite eingefügt zu werden, sondern kann bereits in der auf der X-Achse vorgesehenen Endposition an der Halterung angebracht werden.

Zu diesem Zweck wird zuerst die Tragschiene 50d von vorne und in schräger Lage in Richtung des zweiten Halteelements 20d bzw. 20d' bewegt, so dass die zweite Leiste 65d in den Hinterschnitt des zweiten Halteelements 20d bzw.20d' eingreift. Ist die Leiste 65d genügend tief vorgeschoben, kann die Tragschiene 50d über das erste Halteelement 10d bzw. 10d' hinweg gekippt werden, so dass die Tragschiene 50d auf der Anlagefläche 30d zu liegen kommt. Durch Verschieben in der negativen Z-Achse, was auch aufgrund der Schwerkraft erfolgen kann, erreicht die Tragschiene 50d schliesslich die in den Fig. 17-20 gezeigte Endposition, in welcher sie auf der Anschlagsfläche 12d des ersten Halteelements 10d und auf der Anschlagsfläche des weiteren ersten Halteelements 10d' aufliegt.

Die Tragschiene 50d ist aufgrund der Schwerkraft in ihrer Höhenrichtung auf den Halteelementen 10d, 20d gehalten, kann jedoch - im Unterschied zu den bisher dargestellten Ausführungsbeispielen - bei genügend grosser Krafteinwirkung in der Höhenrichtung verschoben werden.

Die Halterung 10d, 20d, 30d bildet zusammen mit den Leisten 55d, 65d der Tragschiene 50d eine Art Einklink-Bügel-Verbindung.

Beim vorliegenden Beispiel ist der Eingriff der Halteelemente 10d, 20d an die Tragschiene 50d beabstandet zu deren Vorderseite und nahe zu deren Rückseite angeordnet. Es ist damit Freiraum um die Auskragungen 51d, 61d gegeben, so dass an diesen auch am Ort der Halterung ein elektrisches Gerät anbringbar ist. Vorzugsweise beträgt in Höhenrichtung der Tragschiene 50d gemessen der minimale Abstand Fd zwischen den Halteelementen 10d, 20d und der Vorderseite der Tragschiene 50d mindestens die Hälfte der Höhe Hd der Tragschiene 50d.

Die Anlagefläche 30d ist hier als Teil des Halteträgers 70d ausgebildet, welcher beim vorliegenden Ausführungsbeispiel ein U-förmiges Profil aufweist und welcher Befestigungsmittel zur Befestigung z.B. im Schaltschrank enthalten kann, z.B. ein oder mehrere Löcher für eine Schraube.

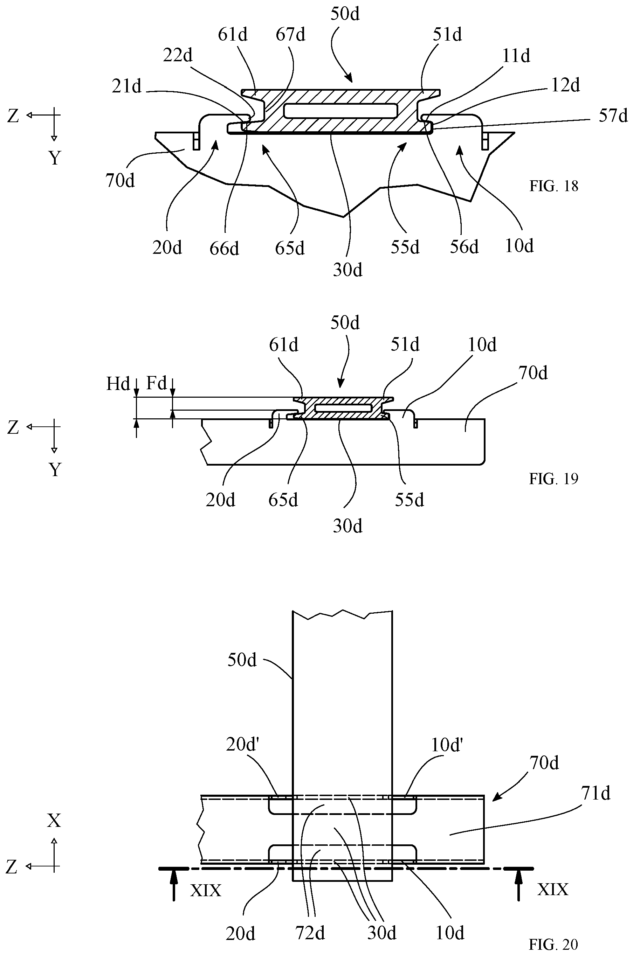

Die Halteelemente 10d, 10d', 20d, 20d' sind hier einteilig mit dem Halteträger 70d ausgebildet, indem deren Form z.B. aus der Vorderseite 71d des Halteträgers 70d herausgestanzt und dieser so gebogen wird, dass die Vorderseite 71d im Wesentlichen rechtwinklig zu den Halteelementen 10d, 10d', 20d, 20d' steht. Dabei entsteht ein Durchbruch 72d in der Vorderseite 71d (vgl. Fig. 20). Hier sind die Halteelemente 10d und 20d sowie die Halteelemente 10d' und 20d' jeweils über ein Mittelteil verbunden, welches zusammen mit der Vorderseite 71d als Anlagefläche 30d für die Tragschiene 50d dient.

Als Variante ist es denkbar, mindestens eines der Halteelemente 10d, 10d', 20d, 20d' als eine vom Halteträger 70d separat ausgebildete Komponente vorzusehen, welche fest am Halteträger 70d angebracht ist oder alternativ mittels lösbarer Verbindung anbringbar ist. Je nach Ausgestaltung kann die Anlagefläche 30d ein Teil dieser separaten Komponente sein.

In einer vereinfachten Variante ist es denkbar, eine Halterung vorzusehen, bei welcher die Halteelemente 10d und 20d oder die Halteelemente 10d' und 20d' weggelassen sind.

### Sechstes Ausführungsbeispiel

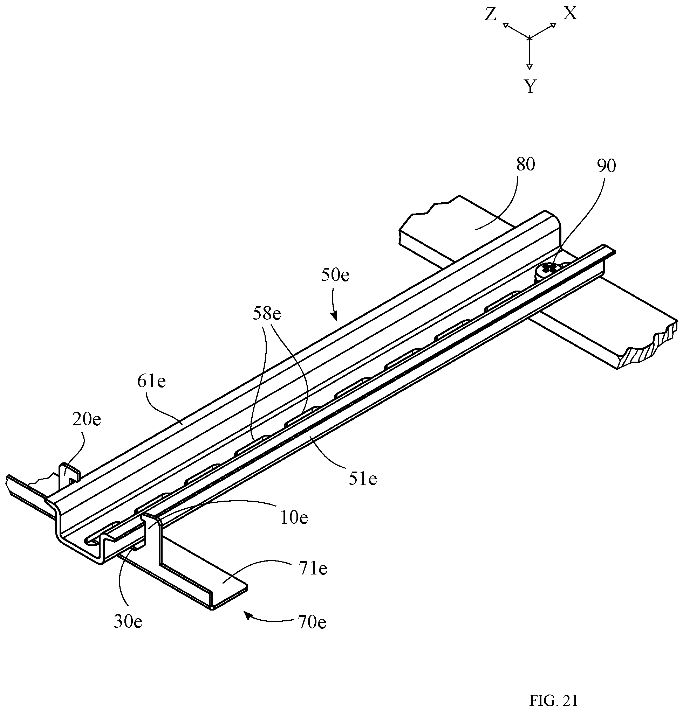

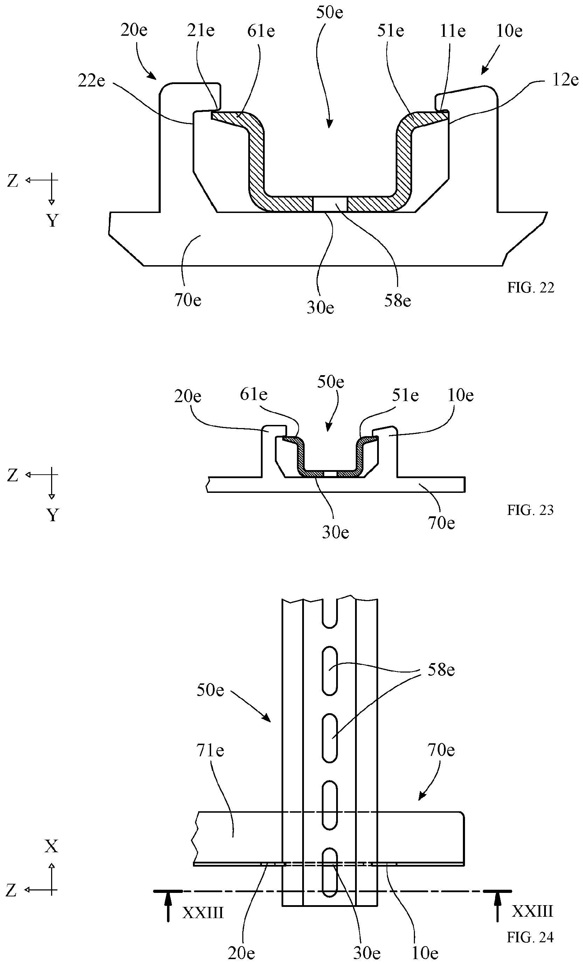

Fig. 21-24 zeigen ein Ausführungsbeispiel, bei welcher die Halterung aus dem fünften Ausführungsbeispiel angepasst ist zum Halten einer Tragschiene 50e, die ein hutförmiges Profil aufweist und verglichen mit den bisher gezeigten Tragschienen 50a-50d doppelt so hoch ausgebildet ist.

Die Halterung umfasst ein erstes Halteelement 10e, ein zweites Halteelement 20e und eine Anlagefläche 30e, an welcher die Tragschiene 50e nach der Montage mit ihrer Rückseite anliegt.

Die Halteelemente 10e, 20e sind in Z-Richtung gesehen beabstandet zueinander angeordnet und sind so geformt, dass sie über das Niveau der Anlagefläche 30e reichen und jeweils einen Hinterschnitt bilden. Zwischen den Halteelementen 10e, 20e und der Anlagefläche 30e ergibt sich somit ein Aufnahmeraum, in welcher ein Teil der Tragschiene 50e aufnehmbar ist.

Wie beim fünften Ausführungsbeispiel sind die Halteelemente 10e, 20e unterschiedlich zueinander ausgebildet. Das erste Halteelement 10e weist innenseitig eine Anlagefläche 11e auf sowie eine Anschlagsfläche 12e, die quer dazu angeordnet ist, z.B. im Wesentlichen rechtwinklig.

Das zweite Halteelement 20e weist innenseitig eine Anlagefläche 21e auf, welche in Bezug auf die Z-Achse geneigt angeordnet sein kann, so dass es einen Hinterschnitt aufweist, der sich in Richtung zum ersten Halteelement 10e hin gesehen aufweitet.

Das zweite Halteelement 20e weist innenseitig weiter eine Anschlagsfläche 22e auf, welche quer zur Anlagefläche 21e angeordnet ist.

Die Vorderseite der Auskragung 51e bzw. 61e der Tragschiene 50e wirkt als Gegenanlagefläche, an welche die Anlagefläche 11e bzw. 21e anliegt, so dass diese eine Anlagestelle bildet. In der vorliegenden Anordnung wirkt die Stirnseite der Auskragung 51e als Gegenanschlagsfläche zur Anschlagsfläche 12e, welche als Auflager dient.

Der Abstand zwischen der Anlagefläche 30e und den Anlageflächen 11e, 21e ist derart an die Höhe der Tragschiene 50e angepasst, dass diese in ihrer Höhenrichtung unverschiebbar gehalten ist.

In Richtung der Höhenrichtung der Tragschiene 50e gesehen, ist der Hinterschnitt, welcher das zweite Halteelement 20e bildet, länger als der durch das erste Halteelement 10e gebildete Hinterschnitt. Dies erlaubt es, die Auskragungen 51e, 61e von vorne an der Halterung anzubringen, d.h. die Tragschiene 50e kann bereits in der auf der X-Achse vorgesehenen Endposition an der Halterung angebracht werden.

Zu diesem Zweck wird zuerst die Tragschiene 50e von vorne und in schräger Lage in Richtung des zweiten Halteelements 20e bewegt, so dass die zweite Auskragung 61e in den Hinterschnitt des zweiten Halteelements 20e eingreift. Ist die Auskragung 61e genügend tief vorgeschoben, kann die Tragschiene 50e über das erste Halteelement 10e hinweg gekippt werden, so dass die Tragschiene 50e auf der Anlagefläche 30e zu liegen kommt. Durch Verschieben in der negativen Z-Achse, was auch aufgrund der Schwerkraft erfolgen kann, erreicht die Tragschiene 50e schliesslich die in den Fig. 21-24 gezeigte Endposition, in welcher sie auf der Anschlagsfläche 12e des ersten Halteelements 10e aufliegt.

Die Tragschiene 50e ist aufgrund der Schwerkraft in ihrer Höhenrichtung auf dem Halteelement 10e gehalten, kann jedoch bei Bedarf in der Höhenrichtung verschoben werden.

Die Halterung 10e, 20e, 30e bildet zusammen mit den Auskragungen 51e, 61e der Tragschiene 50e eine Art Einklink-Bügel-Verbindung.

Die Anlagefläche 30e ist hier als Teil des Halteträgers 70e ausgebildet, welcher beim vorliegenden Ausführungsbeispiel ein L-förmiges Profil aufweist und welcher Befestigungsmittel zur Befestigung z.B. im Schaltschrank enthalten kann, z.B. ein oder mehrere Löcher für eine Schraube.

Die Halteelemente 10e, 20e und die Anlagefläche 30e sind hier einteilig mit dem Halteträger 70e ausgebildet, indem deren Form z.B. aus einem Blech herausgestanzt und dieses so gebogen wird, dass die Vorderseite 71e im Wesentlichen rechtwinklig zu den Halteelementen 10e, 20e steht.
Als Variante ist es denkbar, mindestens eines der Halteelemente 10e, 20e als eine vom Halteträger 70e separat ausgebildete Komponente vorzusehen, welche fest am Halteträger 70e angebracht ist oder alternativ mittels lösbarer Verbindung anbringbar ist. Je nach Ausgestaltung kann die Anlagefläche 30e Teil dieser separaten Komponente sein.

In Fig. 21 ist beispielhaft eine zweite Halterung gezeigt, bei welcher eine Schraube 90 durch ein Durchgangsloch 58e in der Tragschiene 50e geführt und an einem Vertikalteil 80 festgeschraubt ist. Dadurch ist die Tragschiene 50e in allen drei Richtungen unverschiebbar gehalten.

Natürlich kann die zweite Halterung z.B. auch in Form der Halterung 10e, 20e, 30e ausgebildet sein.

### Siebtes Ausführungsbeispiel

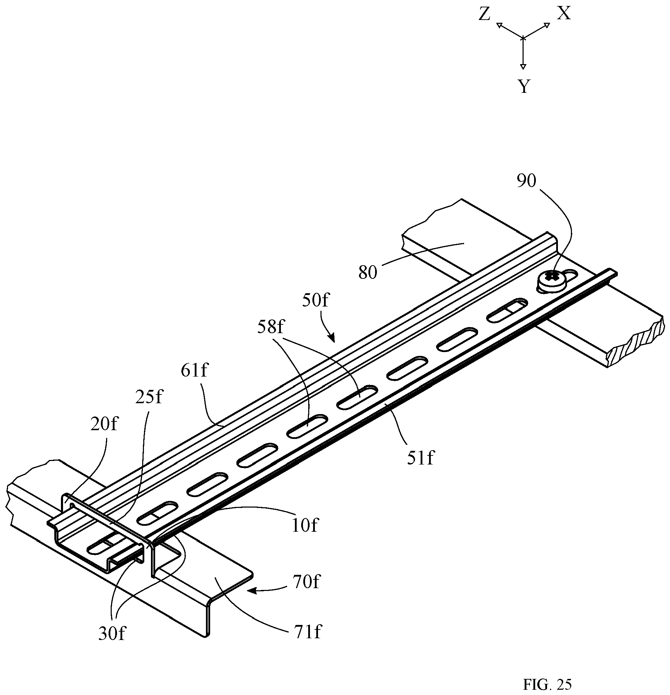

Fig. 25-28 zeigen ein Ausführungsbeispiel einer Halterung mit einem ersten Halteelement 10f, einem zweiten Halteelement 20f und einer Anlagefläche 30f, an welcher die Tragschiene 50f nach der Montage mit ihrer Rückseite anliegt.

Die Halteelemente 10f, 20f sind in Z-Richtung gesehen beabstandet zueinander angeordnet und sind so geformt, dass sie über das Niveau der Anlagefläche 30f reichen und jeweils einen Hinterschnitt bilden. Zwischen den Halteelementen 10f, 20f und der Anlagefläche 30f ergibt sich somit ein Aufnahmeraum, in welcher ein Teil der Tragschiene 50f aufnehmbar ist.

Im vorliegenden Beispiel sind die Halteelemente 10f, 20f über ein Stegteil 25f verbunden, so dass ein die Tragschiene 50f übergreifender Bügel geformt ist.

Das jeweilige Halteelement 10f, 20f weist innenseitig eine Anlagefläche 11f, 21f auf, die im Wesentlichen in der XZ-Ebene liegt und eine Anschlagsfläche 12f, 22f, welche quer dazu angeordnet ist, vorzugsweise in einem im Wesentlichen rechten Winkel.

Die Vorderseite der Auskragung 51f bzw. 61f der Tragschiene 50f wirkt als Gegenanlagefläche, an welche die Anlagefläche 11f bzw. 21f anliegt, so dass diese eine Anlagestelle bildet. In der vorliegenden Anordnung wirkt die Stirnseite der Auskragung 51f als Gegenanschlagsfläche zur Anschlagsfläche 12f, welche als Auflager dient.

Der Abstand zwischen der Anlagefläche 30f und den Anlageflächen 11f, 21f ist derart an die Höhe der Tragschiene 50f angepasst, dass diese in ihrer Höhenrichtung unverschiebbar gehalten ist.

Der Abstand zwischen den Stirnseiten der Auskragungen 51f, 61f entspricht hier dem Abstand zwischen den Anschlagsflächen 12f, 22f, so dass die Tragschiene 50f zwischen diesen unverschiebbar in der Breitenrichtung, d.h. in der Z-Achse gehalten ist.

Die Halterung 10f, 20f, 25f, 30f bildet zusammen mit den Auskragungen 51f, 61f der Tragschiene 50f eine Art Bügel-Verbindung.

Beim vorliegenden Beispiel sind die Halteelemente 10f, 20f symmetrisch zueinander ausgebildet. Die Halteelemente 10f, 20f können somit auch um 180 Grad gedreht werden, um daran die Tragschiene 50f anzubringen. Bei dieser Anordnung wirkt dann die Anschlagsfläche 22f des zweiten Halteelements 20f als Auflager für die Tragschiene 50f.

Die Anlagefläche 30f ist hier als Teil des Halteträgers 70f ausgebildet, welcher beim vorliegenden Ausführungsbeispiel ein L-förmiges Profil aufweist und welcher Befestigungsmittel zur Befestigung z.B. im Schaltschrank enthalten kann, z.B. ein oder mehrere Löcher für eine Schraube.

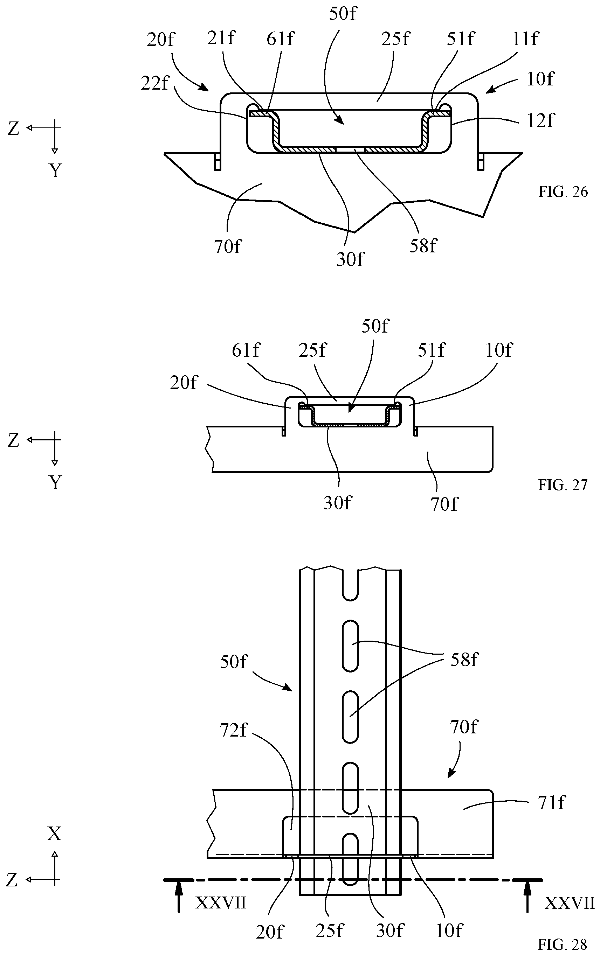

Die Halteelemente 10f, 20f zusammen mit dem Stegteil 25f sind hier einteilig mit dem Halteträger 70f ausgebildet, indem deren Form z.B. aus der Vorderseite 71f des Halteträgers 70f herausgestanzt und dieser so gebogen wird, dass die Vorderseite 71f im Wesentlichen rechtwinklig zu den Elementen 10f, 20f, 25f steht. Dabei entsteht ein Durchbruch 72f in der Vorderseite 71f (vgl. Fig. 28). Die Halteelemente 10f, 20f sind hier über ein rückseitiges Mittelteil verbunden, welches zusammen mit der Vorderseite 71f als Anlagefläche 30f für die Tragschiene 50f dient.

Als Variante ist es denkbar, mindestens eines der Halteelemente 10f, 20f und gegebenenfalls zusammen mit dem Stegteil 25f als eine vom Halteträger 70f separat ausgebildete Komponente vorzusehen, welche fest am Halteträger 70f angebracht ist oder alternativ mittels lösbarer Verbindung anbringbar ist. Je nach Ausgestaltung kann die Anlagefläche 30f Teil dieser separaten Komponente sein.

In Fig. 25 ist beispielhaft eine zweite Halterung gezeigt, bei welcher eine Schraube 90 durch ein Durchgangsloch 58f in der Tragschiene 50f geführt und an einem Vertikalteil 80 festgeschraubt ist. Dadurch ist die Tragschiene 50f in allen drei Richtungen unverschiebbar gehalten.

Natürlich kann die zweite Halterung z.B. auch in Form der Halterung 10f, 20f, 25f, 30f ausgebildet sein.

### Achtes Ausführungsbeispiel

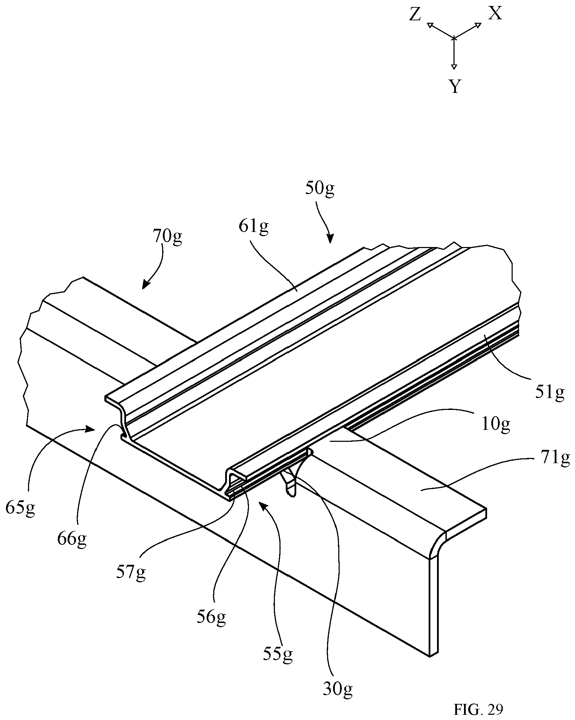

Fig. 29-32 zeigen ein Ausführungsbeispiel einer Halterung mit einem ersten Halteelement 10g, einem zweiten Halteelement 20g und einer Anlagefläche 30g, an welcher die Tragschiene 50g nach der Montage mit ihrer Rückseite anliegt.

Die Halteelemente 10g, 20g sind in Z-Richtung gesehen beabstandet zueinander angeordnet und sind so geformt, dass sie über das Niveau der Anlagefläche 30g reichen und jeweils einen Hinterschnitt bilden. Zwischen den Halteelementen 10g, 20g und der Anlagefläche 30g ergibt sich somit ein Aufnahmeraum, in welcher ein Teil der Tragschiene 50g aufnehmbar ist.

Das jeweilige Halteelement 10g, 20g weist eine Anlagefläche 11g, 21g auf, welche auf der Rückseite eines Halteelements 10g, 20g angeordnet ist, und eine Anschlagsfläche 12g, 22g, welche durch die Stirnseite des Endes eines Halteelements 10g, 20g gebildet ist. Die beiden Flächen 11g und 12g bzw. 21g und 22g eines jeweiligen Halteelements 10g, 20g sind unter einem spitzen Winkel zueinander angeordnet. Die Stirnseite des Endes eines Haltelements 10g, 20g ist somit abgeschrägt.

Die Tragschiene 50g weist ein hutförmiges Profil auf. Der jeweilige Seitenbereich 55g, 65g, welcher benachbart zur Rückseite der Tragschiene 50g angeordnet ist, weist eine Nut auf, welche komplementär zum Ende eines Halteelements 10g, 20g ausgebildet ist. Entsprechend ist hier die Nut durch eine Gegenanlagefläche 56g, 66g und eine unter einem spitzen Winkel dazu angeordnete Gegenanschlagsfläche 57g, 67g gebildet.

Im montierten Zustand greift das Halteelement 10g, 20g in die Nut der Tragschiene 50g. Die Halterung 10g, 20g, 30g bildet somit zusammen mit den Seitenbereichen 55g, 65g der Tragschiene 50g eine Nutverbindung.

Beim vorliegenden Beispiel liegt die Gegenanlagefläche 56g, 66g an der Anlagefläche 11g, 21g eines Halteelements 10g, 20g an, so dass die Tragschiene 50g in Y-Richtung gehalten ist. Die Anlageflächen 11g, 21g bilden somit Anlagestellen, welche die Tragschiene 50g in ihrer Höhenrichtung halten. Der Abstand zwischen der Anlagefläche 30g und der Anlagefläche 11g, 21g ist so gewählt, dass die Tragschiene 50g in ihrer Höhenrichtung unverschiebbar halten.

Bei der vorliegenden Anordnung von Halterung und Tragschiene 50g wirkt die Schwerkraft in Richtung der negativen Z-Achse. Im montierten Zustand wirkt die Anschlagsfläche 12g des ersten Halteelements 10g als Auflager für die Tragschiene 50g, welche mit ihrer Gegenanschlagsfläche 57g aufliegt. Die Anschlagsfläche 12g des zweiten Halteelements 10g wirkt als Begrenzungsteil in der Breitenrichtung der Tragschiene 50g. Der Abstand zwischen den Gegenanschlagsflächen 57g, 67g entspricht dem Abstand zwischen den Anschlagsflächen 12g, 22g, so dass die Tragschiene 50g zwischen diesen unverschiebbar in der Breitenrichtung, d.h. in der Z-Achse gehalten ist.

Beim vorliegenden Beispiel ist der Eingriff der Halteelemente 10g, 20g an die Tragschiene 50g beabstandet zu deren Vorderseite und nahe zu deren Unterseite angeordnet. Es ist damit Freiraum um die Auskragungen 51g, 61g gegeben, so dass an diesen auch am Ort der Halterung ein elektrisches Gerät anbringbar ist. Vorzugsweise beträgt in Höhenrichtung der Tragschiene 50g gemessen der minimale Abstand Fg zwischen den Halteelementen 10g, 20g und der Vorderseite der Tragschiene 50g mindestens die Hälfte der Höhe Hg der Tragschiene 50g.

Beim vorliegenden Beispiel sind die Halteelemente 10g, 20g symmetrisch zueinander ausgebildet. Die Halteelemente 10g, 20g können somit auch um 180 Grad gedreht werden, um daran die Tragschiene 50g anzubringen. Bei dieser Anordnung wirkt dann die Anschlagsfläche 22g des zweiten Halteelements 20g als Auflager für die Tragschiene 50g.

Die Anlagefläche 30g ist hier als Teil des Halteträgers 70g ausgebildet, welcher beim vorliegenden Ausführungsbeispiel ein L-förmiges Profil aufweist und welcher Befestigungsmittel zur Befestigung z.B. im Schaltschrank enthalten kann, z.B. ein oder mehrere Löcher für eine Schraube.

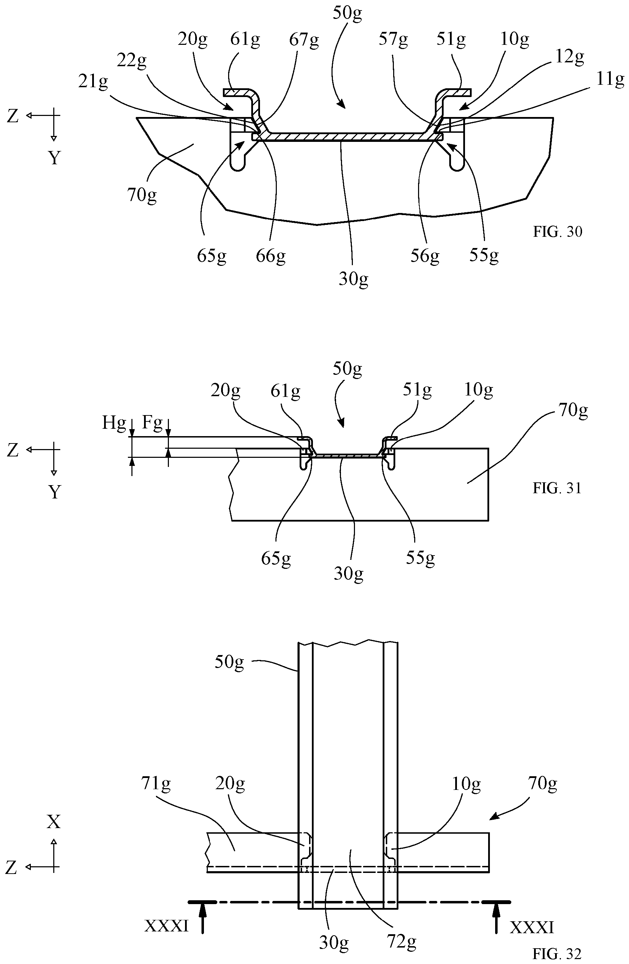

Die Halteelemente 10g, 20g sind hier einteilig mit dem Halteträger 70g ausgebildet, indem deren Form z.B. aus der Vorderseite 71g des Halteträgers 70g herausgestanzt und in die gewünschte Form gebogen wird. Zwischen den Halteelementen 10g, 20g ergibt sich somit ein Durchbruch 72g in der Vorderseite 71g des Halteträgers 70g, an welche die Anlagefläche 30g in angrenzt (vgl. Fig. 32).

Als Variante ist es denkbar, das Halteelement 10g oder 20g oder beide Halteelemente 10g und 20g als eine vom Halteträger 70g separat ausgebildete Komponente vorzusehen, welche vorzugsweise mittels lösbarer Verbindung am Halteträger 70g anbringbar ist. Entsprechend kann die Anlagefläche 30g ein Teil dieser separaten Komponente sein.

Sind die Halteelemente 10g, 20g unlösbar mit dem Halteträger 70g verbunden, ist die Tragschiene 50g daran anbringbar, indem die Seitenbereiche 55g, 65g von der Seite zwischen die Halteelemente 10g, 20g eingefügt und durch Verschieben in der X-Richtung in die gewünschten Endlage verschoben werden. Ist mindestens ein Halteelement 10g, 20g als eine vom Halteträger 70g separate und mit diesem als lösbar verbindbare Komponente ausgebildet, so kann die Tragschiene 50g direkt bei ihrer Endlage am Halteträger 70g angeordnet und dort durch Befestigen der Komponente am Halteträger 70g gehalten werden.

Die hier gezeigte Form des Endes eines Halteelements 10g, 20g und der entsprechend komplementär ausgebildeten Nut im Seitenbereich 65g, 65g ist nur ein mögliches Beispiel. Die Form kann auch anders sein.

### Weitere Varianten der Halterung

Ausser beim fünften und sechsten Ausführungsbeispiel sind die Halteelemente 10a-10c, 10f-10h, 20a-20c, 20f-20h eines jeweiligen Ausführungsbeispiels symmetrisch zueinander ausgebildet ist. Es ist auch denkbar, die Halteelemente dieser Ausführungsbeispiele in unterschiedlicher Form auszugestalten.

Entsprechend kann die Tragschiene 50a-50c, 50f, 50g ein nicht-achsensymmetrisches Profil aufweisen.

Die Halteelemente 10a-10h, 20a-20h sowie die Anlagefläche 30a-30h sind z.B. aus Metall.

Der jeweilige Halteträger 70a-70h, welcher z.B. aus Metall ist, kann auch ein anderes Profil aufweisen als hier gezeigt, z.B. eben.

Das jeweilige erste und zweite Halteelement 10a-10h, 20a-20h sowie die Anlagefläche 30a-30h können Teil von einer vom Halteträger 70a-70h separat ausgebildeten Komponente sein, die fest mit dem Halteträger verbunden oder verbindbar ist. Beispielsweise kann die Komponente mittels einer lösbaren Verbindung mit dem Halteträger verbunden werden, welche eine Schnapp-, Bajonett- und/oder Schraubverbindung umfasst.

Entlang eines Halteträgers 70a-70h können mehrere Halterungen vorgesehen sein, z.B. in regelmässigen Abständen.

In einer weiteren Variante kann die Rückwand eines Schaltschranks als Halteträger dienen, mit welcher das erste Halteelement 10a-10h, das zweite Halteelement 20a-20h und/oder die Anlagefläche 30a-30h integral ausgebildet sind.

### Tragschiene

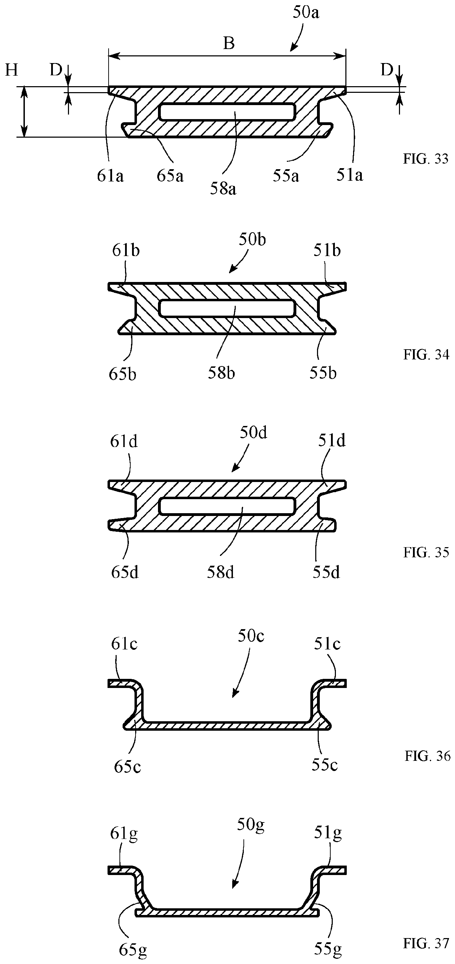

Figg. 33-37 zeigen nochmals die Tragschienen 50a-50d, 50g von jenen Ausführungsbeispielen, bei welchen der jeweilige Seitenbereich 55a-55d, 55g, 65a-65d, 65g, der benachbart zur Rückseite der Tragschiene 50a-50d, 50g ist, einen Vorsprung bzw. eine Nut zur Verbindung mit einer Halterung aufweist. Dadurch kann diese beabstandet zur Vorderseite der Tragschiene 50a-50d, 50g angreifen, so dass auch am Ort der Halterung ein elektrisches Gerät anbringbar ist.

Die Vorsprung bzw. die Nut muss sich nicht unbedingt durchgehend entlang der Längsrichtung X der Tragschiene 50a-50d, 50g erstrecken, sondern kann auch unterbrochen sein, so dass sich abschnittsweise der Vorsprung bzw. die Nut ergibt. Die Unterbrüche können z.B. in regelmässigen Abständen angeordnet sein.

Die Grössenverhältnisse sind in diesen Figg. 33-37 massstabsgetreu gezeigt, wobei u.a. folgende Grössen der Norm DIN EN 60715 entsprechen.
- Die Höhe H einer Tragschiene (in Fig. 3, 7, 11, 19, 31 auch mit Ha, Hb, Hc, Hd, Hg bezeichnet) beträgt 7,5 mm.
- Die Vorderseite mit den Auskragungen 51a-51d, 51g, 61a-61d, 61g weist eine Breite B von 35 mm auf.
- Die jeweilige Auskragung ist am offenen Ende D = 1 mm dick.

Die Tragschienen 50a-50d, 50g können somit anstelle einer Hutschiene TH 35-7,5 (Hutschiene mit B = 35 mm und H = 7,5 mm) gemäss Norm DIN EN 60715 verwendet werden.

Die jeweilige Tragschiene 50a, 50b, 50d ist beispielsweise aus einem elektrisch isolierenden Material, z.B. Kunststoff fertigbar. Beispielsweise kann die Tragschiene 50a, 50b, 50d durch Extrusion aus thermoplastischem Kunststoff hergestellt werden. Die jeweilige Tragschiene 50a, 50b, 50d weist mindestens einen Hohlraum 58a, 58b, 58d auf, der sich in der Längsrichtung X erstreckt. Um die Festigkeit nicht zu reduzieren, sind die Tragschienen 50a, 50b, 50d frei von auf der ganzen Schienenlänge angeordneten, durch die Vorder- und Rückseite hindurchgehenden Löchern.

Ist die Tragschiene 50a, 50b, 50d aus Kunststoff gefertigt, so kann es aufgrund von Temperaturschwankungen zu Grössenveränderungen kommen. Vorzugsweise ist die Halterung gemäss den oben beschrieben Ausführungsbeispielen so eingerichtet, dass die Tragschiene 50a, 50b, 50d bei Zimmertemperatur (20 Grad Celsius) in ihrer Breitenrichtung Z und/oder Längsrichtung X lose gehalten ist, so dass eine durch Temperaturschwankungen verursachte Ausdehnung der Tragschiene auffangbar ist. Die Tragschienen 50c, 50g sind z.B. aus Metall, beispielsweise Stahl fertigbar.

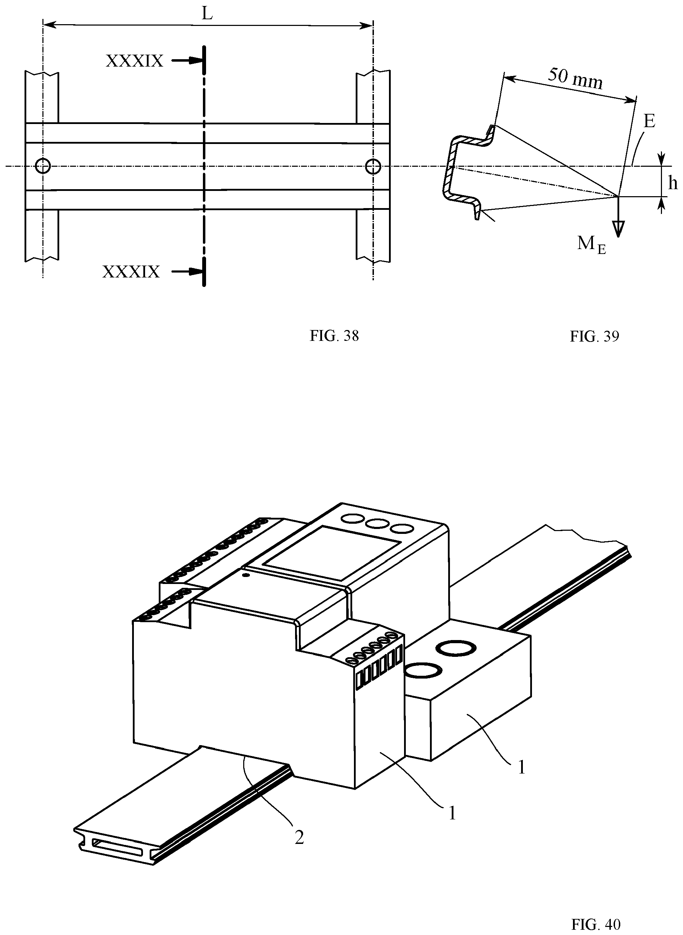

Eine jeweilige Tragschiene 50a-50d, 50g, insbesondere die Wandstärke des Materials, ist so ausgelegt, dass sie die Steifheit einer Hutschiene TH 35-7,5 gemäss Anhang B der DIN EN 60715 erreicht. Die Steifheit wird dabei als Mass in mm für die Verdrehung angegeben, mit welcher die Tragschiene, gemessen in einem Abstand von 50 mm von ihrer Vorderseite, von der Mitteleebene E abweicht, wenn ein Moment M_{E} mit einem Abstand von 50 mm von der Vorderseite der Tragschiene, welche der Befestigungsebene der elektrischen Geräte entspricht, angreift, vgl. Fig. 38 und Fig. 39. Der Wert h hängt dabei nebst dem Moment M_{E} auch vom Abstand L zwischen den Befestigungspunkten der Tragschiene 50a-50d, 50g ab.

Die Tragschiene 50a-50d, 50g, welche hier eine Höhe von 7,5 mm aufweist, ist so ausgelegt, dass sie sich, gemessen in einem Abstand von 50 mm von ihrer Vorderseite, von der Mittelebene E um maximal h = 2 mm wegverdreht, wenn sie an zwei um L = 500 mm voneinander beabstandeten Stellen befestigt ist und ein Moment von M_{E} = 400 Nmm auf sie wirkt.

Anstelle der in den Figg. 33-37 niedrigen Höhe, kann der Mittelteil der Tragschiene zwischen Vorder- und Rückseite auch länger ausgestaltet sein, so dass sich eine Höhe H von 15 mm ergibt. In diesem Fall ist die Tragschiene so ausgelegt, dass sie die Steifheit einer Hutschiene TH 35-15 (Hutschiene mit B = 35 mm und H = 15 mm) gemäss Anhang B der DIN EN 60715 erreicht. Demnach biegt sich die Tragschiene, gemessen in einem Abstand von 50 mm von ihrer Vorderseite, von der Mittelebene E um maximal h = 2 mm weg, wenn die Tragschiene an zwei um L = 700 mm voneinander beabstandeten Stellen befestigt ist und auf diese ein Moment von M_{E} = 5000 Nmm wirkt.

Die Auskragungen 51a-51d, 51g, 61a-61d, 61g einer Tragschiene 50a-50d, 50g sind so ausgelegt, dass elektrische Geräte 1, welche zur Energie- und/oder Datenübertragung dienen und welche vorzugsweise der Norm DIN 43 880 entsprechen, daran befestigbar sind. Ein jeweiliges Gerät 1 umfasst eine Vertiefung 2, in welche die Tragschiene z.B. zum Aufschnappen eingreifen kann, vgl. Fig. 40.

### Weitere Ausführungsformen

Nachfolgend werden weitere Ausführungsformen einer Tragschiene, eines Montagesets und eines Schaltschrankes beschrieben.

### Ausführungsform 1:

Tragschiene (50a-50d, 50g) für einen Schaltschrank, welche ein Profil mit Auskragungen (51a-51f, 61a-61f) an der Vorderseite aufweist, an welchen elektrische Geräte (1) anbringbar sind, wobei die Tragschiene aus einem elektrisch isolierenden Material gefertigt ist und/oder der jeweilige Seitenbereich (55a-55d, 55g, 65a-65d, 65g), der benachbart zur Rückseite der Tragschiene ist, zur Verbindung mit einem Halteelement (10a-10g, 20a-20g) einer Halterung einen Vorsprung (55a-55d, 65a-65d) und/oder eine Nut (56g, 57g, 66g, 67g) aufweist.

### Ausführungsform 2:

Tragschiene nach der Ausführungsform 1, wobei der Vorsprung (55a-55d, 65a-65d) bzw. die Nut (56g, 57g, 66g, 67g) in Längsrichtung (X) der Tragschiene (50a-50d, 50g) durchgehend oder durch Unterbrüche unterbrochen verläuft, welche vorzugsweise in regelmässigen Abständen angeordnet sind,

### Ausführungsform 3:

Tragschiene nach einer der Ausführungsformen 1-2, wobei der jeweilige Seitenbereich (55b, 55c, 55g, 65a-65d, 65g) eine abgeschrägte Seitenfläche (56b, 56c, 66b, 66c) aufweist zur Bildung einer Schwalbenschwanzverbindung mit der Halterung.

### Ausführungsform 4:

Tragschiene nach einer der Ausführungsformen 1-3, wobei die Tragschiene (50a, 50b, 50d) mindestens einen Hohlraum (58a, 58b, 58d) aufweist und/oder aus Kunststoff, vorzugsweise thermoplastischem Kunststoff, gefertigt ist.

### Ausführungsform 5:

Tragschiene nach einer der Ausführungsformen 1-4, wobei die Tragschiene (50a, 50b, 50d) eine ebene Vorder- und/oder Rückseite aufweist und/oder die Tragschiene frei von durch die Vorder- und Rückseite hindurchgehenden Durchgangslöchern ist.

### Ausführungsform 6:

Tragschiene nach einer der Ausführungsformen 1-5, welche Traschiene mindestens eine der folgenden Bedingungen a-e erfüllt:
a) die Tragschiene weist eine Höhe zwischen 5 mm und 20 mm auf, vorzugsweise beträgt die Höhe (H) 7,5 mm oder 15 mm,
b) die Tragschiene umfasst eine Vorderseite, welche eine Breite (B) zwischen 30 mm und 40 mm aufweist, vorzugsweise beträgt die Breite 35 mm,
c) die jeweilige Auskragung ist am offenen Ende zwischen 0,5 mm und 1,5 mm dick (D), vorzugsweise 1 mm
d) die Tragschiene verbiegt sich, gemessen in einem Abstand von 50 mm von der Vorderseite der Tragschiene, von der horizontalen Mittelebene (E) um maximal 2 mm weg, wenn die Tragschiene an zwei um 500 mm (L) voneinander beabstandeten Stellen befestigt ist und auf diese mit einem Abstand von 50 mm von der Vorderseite der Tragschiene ein Moment (M_{E}) von 400 Nmm wirkt.
e) die Tragschiene verbiegt sich, gemessen in einem Abstand von 50 mm von der Vorderseite der Tragschiene, von der Mittelebene (E) um maximal 2 mm weg, wenn die Tragschiene an zwei um 700 mm (L) voneinander beabstandeten Stellen befestigt ist und auf diese mit einem Abstand von 50 mm von der Vorderseite der Tragschiene ein Moment (M_{E}) von 5000 Nmm wirkt.

### Ausführungsform 7:

Montageset für einen Schaltschrank, welches mindestens eine Halterung nach einem der nachfolgenden Ansprüche 1-11 und mindestens eine Tragschiene (50a-50g) umfasst, an welchem elektrische Geräte (1) anbringbar sind und welche vorzugsweise eine Tragschiene nach einer der Ausführungsformen 1-6 ist.

### Ausführungsform 8:

Schaltschrank mit einer oder mehreren Halterungen nach einem der nachfolgenden Ansprüche 1-11, vorzugweise weist der Schaltschrank mindestens einen Halteträger (70a-70h) auf, mit welchem das erste Halteelement (10a-10h), das zweite Halteelement (20a-20h) und/oder die Anlagefläche (30a-30h) einer Halterung integral ausgebildet ist, besonders bevorzugt bildet der mindestens eine Halteträger einen Längsträger, der vertikal verlaufend montierbar ist und/oder an welchem mehrere Tragschienen (50a-50g) anbringbar sind, oder die Rückwand des Schaltschrankes.

## Patentansprüche

1. Halterung zum Anbringen einer Tragschiene (50a-50g) für elektrische Geräte (1) an einer Wand, insbesondere an einer Rückwand eines Schaltschranks, derart, dass die Tragschiene in ihrer Längsrichtung (X) horizontal verläuft, wobei die Tragschiene ein Profil aufweist, welches sich in Längsrichtung gesehen in der Breiten- (Z) und Höhenrichtung (Y) erstreckt, wobei die Halterung eine Anlagefläche (30a-30h) umfasst, an welche die Tragschiene rückseitig nach deren Montage anliegt, und ein erstes (10a-10h) und zweites Halteelement (20a-20h), welche in der Breitenrichtung der Tragschiene beabstandet zueinander angeordnet sind und über das Niveau der Anlagefläche reichen, sodass mindestens ein Teil der Tragschiene zwischen der Anlagefläche und den Halteelementen aufnehmbar ist, wobei die Halteelemente zum Halten der Tragschiene in ihrer Höhenrichtung Anlagestellen (11a-11h, 21a-21h) aufweisen, an welche die Tragschiene nach der Montage anliegt, und wobei das erste Halteelement (10a-10h) ein Auflager (12a, 11b, 11c, 12d-12h) aufweist, auf welchem die Tragschiene nach der Montage aufliegt.

2. Halterung nach Anspruch 1, wobei die Halteelemente (10a-10d, 10g, 10h, 20a-20d, 20g, 20h) ausgestaltet sind, die Tragschiene (50a-50d, 50g) beabstandet zu deren Vorderseite zu halten, so dass in Höhenrichtung (Y) der Tragschiene gemessen der minimale Abstand (Fa, Fb, Fb', Fc, Fd) zwischen den Halteelementen und der Vorderseite der dazwischen gehaltenen Tragschiene mindestens die Hälfte der Höhe der Tragschiene beträgt.

3. Halterung nach einem der vorangehenden Ansprüche, wobei das erste (10a-10h) und/oder zweite Halteelement (20a-20h) einen hinterschnittenen Aufnahmeraum aufweist, in welchen ein Teil der Tragschiene (50a-50g) einfügbar ist, vorzugsweise ist der Aufnahmeraum durch Flächen (11a, 12a, 21a, 22a, 11d, 12d, 11e, 12e, 21e, 22e, 11f, 12f, 21f, 22f) begrenzt, welche quer zueinander angeordnet sind.

4. Halterung nach Anspruch 3, wobei der hinterschnittene Aufnahmeraum des ersten Halteelements (10d, 10e) ein erster Aufnahmeraum ist, der als Anlagestelle und Auflager dient, und der hinterschnittene Aufnahmeraum des zweiten Halteelements (20d, 20e) ein zweiter Aufnahmeraum, der als Anlagestelle dient und in Höhenrichtung (Y) der Tragschiene (50d, 50e) gesehen länger als der erste Aufnahmeraum ist, so dass die Tragschiene zur Montage von aussen zuerst in den zweiten Aufnahmeraum und nach anschliessendem Kippen in den ersten Aufnahmeraum einfügbar ist, so dass die Tragschiene auf dem inneren Ende des ersten Aufnahmeraums aufliegt, vorzugsweise ist der zweite Aufnahmeraum in Höhenrichtung der Tragschiene gesehen mindestens 50 % länger als der erste Aufnahmeraum.

5. Halterung nach einem der vorangehenden Ansprüche, wobei die Anlagestelle (11b, 11c, 11h) des ersten Halteelements (10b, 10c, 10h) auch als Auflager ausgebildet ist.

6. Halterung nach einem der vorangehenden Ansprüche, wobei das erste (10b, 10c, 10g, 10h) und/oder zweite Halteelement (20b, 20c, 20g, 20h) ein offenes Ende mit einer abgeschrägten Stirnseite aufweist.

7. Halterung nach einem der vorangehenden Ansprüche, wobei die Anlagefläche (30b, 30c, 30h) eine erste Anlagefläche ist und die jeweilige Anlagestelle des ersten (10b, 10c, 10h) und zweiten Halteelements (20b, 20c, 20h) eine weitere Anlagefläche (11b, 11c, 21b, 21c, 21h) aufweist, wobei die weiteren Anlageflächen zueinander geneigt angeordnet sind, so dass sich in Richtung von der ersten Anlagefläche weg gesehen eine Verjüngung ergibt.

8. Halterung nach einem der vorangehenden Ansprüche, wobei das erste (10f) und zweite Halteelement (20f) zur Bildung eines die Tragschiene (50f) übergreifenden Bügels über ein Stegteil (25f) verbunden sind, vorzugsweise ist der Stegteil (25f) einteilig mit dem ersten (10f) und dem zweiten Halteelement (20f) ausgebildet.

9. Halterung nach einem der vorangehenden Ansprüche, wobei das erste Halteelement (10a-10h), das zweite Halteelement (20a-20h) und/oder die Anlagefläche (30a-30h) einteilig mit einem Halteträger (70a-70h) ausgebildet ist, vorzugsweise ist der Halteträger ein Längsträger, der vertikal verlaufend an der Wand montierbar ist und/oder an welchem mehrere Tragschienen (50a-50g) gehalten werden können.

10. Halterung nach einem der vorangehenden Ansprüche, welche mindestens einen Halteträger aufweist, der an der Wand vertikal verlaufend montierbar ist und/oder an welchem mehrere Tragschienen (50a-50g) gehalten werden können, wobei das erste Halteelement, das zweite Halteelement und/oder die Anlagefläche Teil von einer vom Halteträger separat ausgebildeten Komponente ist, die fest mit dem Halteträger verbunden oder verbindbar ist, vorzugsweise ist die Komponente mittels einer lösbaren Verbindung mit dem Halteträger verbindbar, welche eine Schnapp-, Bajonett-, Überlappungs- und/oder Schraubverbindung umfasst.

11. Halterung nach einem der vorangehenden Ansprüche, die eingerichtet ist, eine Tragschiene (50a-50g) schraubenlos zu halten, eine Tragschiene mit einer Vorderseite, welche eine Breite von 35 mm aufweist, und/oder eine Tragschiene mit einer Höhe von 7,5 mm oder 15 mm, und/oder die Halterung ist so eingerichtet, dass die daran angebrachte Tragschiene bei einer Zimmertemperatur von 20 Grad Celsius in ihrer Längs- und/oder Breitenrichtung (X, Z) lose gehalten ist, so dass eine durch Temperaturschwankungen verursachte Ausdehnung der Tragschiene auffangbar ist.

12. Tragschiene (50a-50d, 50g) für einen Schaltschrank, welche ein Profil mit Auskragungen (51a-51f, 61a-61f) an der Vorderseite aufweist, an welchen elektrische Geräte (1) anbringbar sind, wobei die Tragschiene aus einem elektrisch isolierenden Material gefertigt ist und/oder der jeweilige Seitenbereich (55a-55d, 55g, 65a-65d, 65g), der benachbart zur Rückseite der Tragschiene ist, zur Verbindung mit einem Halteelement (10a-10g, 20a-20g) einer Halterung einen Vorsprung (55a-55d, 65a-65d) und/oder eine Nut (56g, 57g, 66g, 67g) aufweist.

13. Tragschiene nach Anspruch 12, wobei der Vorsprung (55a-55d, 65a-65d) bzw. die Nut (56g, 57g, 66g, 67g) in Längsrichtung (X) der Tragschiene (50a-50d, 50g) durchgehend oder durch Unterbrüche unterbrochen verläuft, welche vorzugsweise in regelmässigen Abständen angeordnet sind,

14. Tragschiene nach einem der Ansprüche 12-13, wobei der jeweilige Seitenbereich (55b, 55c, 55g, 65a-65d, 65g) eine abgeschrägte Seitenfläche (56b, 56c, 66b, 66c) aufweist zur Bildung einer Schwalbenschwanzverbindung mit der Halterung.

15. Tragschiene nach einem der Ansprüche 12-14, welche mindestens eine der folgenden Bedingungen a-e erfüllt:
a) die Tragschiene weist eine Höhe zwischen 5 mm und 20 mm auf, vorzugsweise beträgt die Höhe (H) 7,5 mm oder 15 mm,
b) die Tragschiene umfasst eine Vorderseite, welche eine Breite (B) zwischen 30 mm und 40 mm aufweist, vorzugsweise beträgt die Breite 35 mm,
c) die jeweilige Auskragung ist am offenen Ende zwischen 0,5 mm und 1,5 mm dick (D), vorzugsweise 1 mm
d) die Tragschiene verbiegt sich, gemessen in einem Abstand von 50 mm von der Vorderseite der Tragschiene, von der horizontalen Mittelebene (E) um maximal 2 mm weg, wenn die Tragschiene an zwei um 500 mm (L) voneinander beabstandeten Stellen befestigt ist und auf diese mit einem Abstand von 50 mm von der Vorderseite der Tragschiene ein Moment (M_{E}) von 400 Nmm wirkt.
e) die Tragschiene verbiegt sich, gemessen in einem Abstand von 50 mm von der Vorderseite der Tragschiene, von der Mittelebene (E) um maximal 2 mm weg, wenn die Tragschiene an zwei um 700 mm (L) voneinander beabstandeten Stellen befestigt ist und auf diese mit einem Abstand von 50 mm von der Vorderseite der Tragschiene ein Moment (M_{E}) von 5000 Nmm wirkt.

16. Schaltschrank mit einer oder mehreren Halterungen nach einem der Ansprüche 1-11, vorzugweise weist der Schaltschrank mindestens einen Halteträger (70a-70h) auf, mit welchem das erste Halteelement (10a-10h), das zweite Halteelement (20a-20h) und/oder die Anlagefläche (30a-30h) einer Halterung integral ausgebildet ist, besonders bevorzugt bildet der mindestens eine Halteträger einen Längsträger, der vertikal verlaufend montierbar ist und/oder an welchem mehrere Tragschienen (50a-50g) anbringbar sind, oder die Rückwand des Schaltschrankes.
